(19) **Europäisches Patentamt / European Patent Office / Office européen des brevets**

(11) **EP 3 905 930 B1**

(12) **FASCICULE DE BREVET EUROPEEN**

(45) Date de publication et mention de la délivrance du brevet:
**25.01.2023 Bulletin 2023/04**

(21) Numéro de dépôt: **19832160.6**

(22) Date de dépôt: **30.12.2019**

(51) Classification Internationale des Brevets (IPC):
**A47J 36/32** (2006.01)    **A47J 37/06** (2006.01)

(52) Classification Coopérative des Brevets (CPC):
**A47J 36/32; A47J 37/0611**

(86) Numéro de dépôt international:
**PCT/EP2019/087177**

(87) Numéro de publication internationale:
**WO 2020/141166 (09.07.2020 Gazette 2020/28)**

(54) **PROCÉDÉ DE MISE EN OEUVRE D'UNE FONCTION DE MARQUAGE D'UN ALIMENT SUR UN APPAREIL DE CUISSON ELECTRIQUE**

VERFAHREN ZUR DURCHFÜHRUNG EINER FUNKTION ZUR MARKIERUNG EINES LEBENSMITTELS AUF EINEM ELEKTRISCHEN KOCHGERÄT

METHOD FOR IMPLEMENTING A FUNCTION FOR MARKING A FOOD ON AN ELECTRIC COOKING APPLIANCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.01.2019 FR 1900002**

(43) Date de publication de la demande:
**10.11.2021 Bulletin 2021/45**

(73) Titulaire: **SEB S.A.**
**69130 Ecully (FR)**

(72) Inventeur: **VOLATIER, Sébastien**
**21000 DIJON (FR)**

(74) Mandataire: **SEB Développement**
**Direction Propriété industrielle - Brevets**
**112, chemin du Moulin Carron**
**Campus SEB - CS 90229**
**69134 Ecully Cedex (FR)**

(56) Documents cités:
**WO-A1-2013/107964     WO-A1-2013/107965**
**WO-A1-2015/179904     US-A1- 2015 312 964**
**US-B1- 6 425 319**

**Description**

La présente invention concerne des procédés de mise en oeuvre d'une fonction de marquage d'un aliment à partir d'un appareil de cuisson électrique d'un aliment, comprenant une plaque de cuisson inférieure et une plaque de cuisson supérieure pour chauffer à leur contact un aliment déterminé au cours d'une phase de cuisson, ainsi qu'un appareil de cuisson électrique mettant en oeuvre ces procédés.

Parmi ces appareils de cuisson électrique, on connaît notamment les grils double faces qui comprennent des plaques de cuisson inférieure et supérieure entre lesquelles sont positionnés un ou plusieurs aliments à cuire.

Les aliments sont disposés horizontalement sur la plaque de cuisson inférieure et la plaque supérieure vient reposer sur les aliments. Les aliments peuvent être de la viande, du poisson, des légumes ou autre.

Ces appareils de cuisson électrique opèrent selon deux phases de fonctionnement : une première phase dite de préchauffage sans les aliments et au cours de laquelle les plaques de cuisson sont montées en température, et une phase de cuisson au cours de laquelle les aliments sont disposés entre les plaques et cuisent.

Un tel appareil de cuisson électrique est connu des documents WO2013107964 et WO2013107965 au nom de la demanderesse.

Ces documents décrivent un appareil de cuisson électrique permettant d'obtenir un résultat organoleptique optimisé par une cuisson automatique réellement favorable à l'aliment et au goût de l'utilisateur.

Cet appareil de cuisson électrique se base sur une estimation de la surface d'occupation (Z) par un aliment déterminé (A) sur les plaques et/ou sur l'épaisseur (Y) de l'aliment entre les plaques, qui correspond donc à un écartement entre les deux plaques de cuisson, pour déterminer une durée de cuisson d'un type d'aliment déterminé (A) sélectionné pour laquelle une valeur de température de cuisson interne (X) de l'aliment déterminé (A) est atteinte, une valeur de température de cuisson interne de l'aliment déterminé (A) correspondant à un état de cuisson à coeur de l'aliment déterminé (A), par exemple saignant, à point ou bien cuit.

Plusieurs valeurs de température de cuisson interne peuvent être envisagées, ces valeurs de température de cuisson interne étant stockées dans une mémoire de l'appareil de cuisson électrique.

Cet appareil de cuisson électrique prévoit également une fonction de marquage.

Cette fonction de marquage vise à accentuer le marquage de la surface des aliments lorsque cette fonction de marquage est sélectionnée.

La mise en oeuvre de cette fonction de marquage consiste à augmenter la température des plaques de cuisson au cours de la phase de préchauffage par rapport aux températures des plaques de cuisson lorsque la fonction de marquage n'est pas activée.

De cette manière, un marquage plus prononcé est appliqué sur les aliments lors de l'introduction des aliments entre les deux plaques de cuisson.

Plusieurs températures de consigne destinées à être appliquées au cours de la phase de préchauffage et de la phase de cuisson sont également stockées en mémoire, l'une ou l'autre de ces températures de consigne étant appliquée en fonction notamment du type d'aliment sélectionné par l'utilisateur.

Un tel marquage est :

- rapide en début de cuisson pour une meilleure rétention de l'eau à l'intérieur de l'aliment, et donc un meilleur caractère juteux,
- suffisamment net, tout en pouvant prévenir une carbonisation néfaste, pour apporter du goût et de la croustillance sans générer de composés carcinogènes.

Cependant, il a été constaté que cette augmentation de température pendant la phase de préchauffage générait davantage de cuisson à coeur pendant la phase de cuisson pour des mêmes durée de cuisson que celles déterminées sans la sélection d'une fonction de marquage et cela pour les différentes valeurs de température de cuisson interne disponibles dans la mémoire de l'appareil de cuisson électrique et correspondant chacune à des états de cuisson à coeur différents de l'aliment.

En outre, cette augmentation de température peut également conduire à des marquages hétérogènes de l'aliment.

En effet, au cours de la cuisson la température de la plaque de cuisson inférieure est inférieure à la température de la plaque de cuisson supérieure du fait de l'écoulement des jus sur la plaque de cuisson inférieure.

La présente invention a pour but de résoudre tout ou partie des inconvénients mentionnés ci-dessus.

Aussi, un des buts de la présente invention consiste à ajuster la cuisson de l'aliment lors du choix de la fonction de marquage de manière à éviter une sur-cuisson et à homogénéiser le marquage de l'aliment.

Aussi, l'invention se rapporte à un procédé de mise en oeuvre d'une fonction de marquage d'un aliment à partir d'un appareil de cuisson électrique d'un aliment, tel un gril viande, comprenant une plaque de cuisson inférieure et une plaque de cuisson supérieure pour chauffer à leur contact un aliment déterminé au cours d'une phase de cuisson, caractérisé en ce que ce procédé comprend les étapes suivantes :

- disposer d'une mémoire dans laquelle sont enregistrées et classées selon un ordre croissant des valeurs de différentes températures de cuisson interne de l'aliment déterminé, lesdites valeurs de différentes températures de cuisson interne correspondant chacune à un état de cuisson à coeur de l'aliment déterminé, et dans laquelle sont également stockées des températures de consigne de préchauffage à appliquer au cours d'une phase de préchauffage et au moins une température de consigne de cuisson à appliquer au cours d'une phase de cuisson,
- activer une fonction de marquage de l'aliment déterminé pour réaliser un marquage de la surface de l'aliment déterminé alors souhaité par l'utilisateur,
- sélectionner une température de consigne de préchauffage à appliquer au cours d'une phase de préchauffage et au moins une température de consigne de cuisson à appliquer au cours d'une phase de cuisson parmi celles stockées dans la mémoire en fonction de l'aliment déterminé et de l'activation de la fonction de marquage de l'aliment déterminé,
- après une phase de préchauffage, mettre en contact l'aliment déterminé avec la plaque de cuisson inférieure et la plaque de cuisson supérieure pour démarrer la phase de cuisson dans le but d'atteindre au moins une des valeurs de température de cuisson interne de l'aliment déterminé alors souhaitée par un utilisateur, puis
- déterminer une première durée de cuisson de l'aliment déterminé au cours de la phase de cuisson en fonction de la première dans l'ordre croissant desdites valeurs de température de cuisson interne de l'aliment déterminé parmi les différentes valeurs de température de cuisson interne de l'aliment déterminé enregistrées et classées dans la mémoire, mais également en fonction de l'activation de la fonction de marquage de l'aliment déterminé,
- à l'issue de ladite première durée de cuisson déterminée, indiquer à l'utilisateur, par l'appareil de cuisson électrique, l'atteinte d'une première valeur de température de cuisson interne correspondant à un premier état de cuisson à coeur de l'aliment déterminé, puis :
- si l'utilisateur ne retire pas l'aliment, appliquer par l'appareil de cuisson électrique une deuxième durée de cuisson déterminée de l'aliment déterminé en fonction de la deuxième dans l'ordre croissant desdites valeurs de température de cuisson interne de l'aliment déterminé enregistrées et classées dans la mémoire, mais également en fonction de l'activation de la fonction de marquage de l'aliment déterm iné,
- à l'issue de cette deuxième durée de cuisson déterminée, à nouveau indiquer à l'utilisateur, par l'appareil de cuisson électrique, l'atteinte de la deuxième valeur de température de cuisson interne de l'aliment déterminé correspondant à un deuxième état de cuisson à coeur de l'aliment déterminé,

    - et ainsi de suite si l'utilisateur ne retire pas l'aliment déterminé jusqu'à atteindre la dernière dans l'ordre croissant des dites valeurs de température de cuisson interne de l'aliment déterminé enregistrées et classées dans la mémoire correspondant à un dernier état de cuisson à coeur de l'aliment déterminé.

L'invention se rapporte également à un procédé de mise en oeuvre d'une fonction de marquage d'un aliment à partir d'un appareil de cuisson électrique d'un aliment, tel un gril viande, comprenant une plaque de cuisson inférieure et une plaque de cuisson supérieure pour chauffer à leur contact un aliment déterminé au cours d'une phase de cuisson, caractérisé en ce qu'il comprend les étapes suivantes :

- disposer d'une mémoire dans laquelle sont enregistrées des valeurs de différentes températures de cuisson interne de l'aliment déterminé, lesdites valeurs de différentes températures de cuisson interne correspondant chacune à un état de cuisson à coeur de l'aliment déterminé, et dans laquelle sont également stockées des températures de consigne de préchauffage à appliquer au cours d'une phase de préchauffage et au moins une température de consigne de cuisson à appliquer au cours d'une phase de cuisson,
- activer une fonction de marquage de l'aliment déterminé pour réaliser un marquage de la surface de l'aliment déterminé alors souhaité par l'utilisateur,
- sélectionner une température de consigne de préchauffage à appliquer au cours d'une phase de préchauffage et au moins une température de consigne de cuisson à appliquer au cours d'une phase de cuisson parmi celles stockées dans la mémoire en fonction de l'aliment déterminé et de l'activation de la fonction de marquage de l'aliment déterminé,
- sélectionner un état de cuisson à coeur de l'aliment déterminé correspondant à l'une desdites valeurs de température de cuisson interne,
- après une phase de préchauffage, mettre en contact l'aliment déterminé avec la plaque de cuisson inférieure et la plaque de cuisson supérieure pour démarrer la phase de cuisson dans le but d'atteindre une valeur de température de cuisson interne de l'aliment déterminé correspondant à un état de cuisson à coeur de l'aliment déterminé préalablement sélectionné par un utilisateur, puis
- déterminer une durée de cuisson de l'aliment déterminé au cours de la phase de cuisson en fonction de la valeur de température de cuisson interne correspondant à l'état de cuisson à coeur de l'aliment déterminé sélectionné par l'utilisateur, mais également en fonction de l'activation de la fonction de marquage de l'aliment déterminé,

- à l'issue de la durée de cuisson déterminée, indiquer par l'appareil de cuisson électrique l'atteinte de la valeur de température de cuisson interne correspondant à l'état de cuisson à coeur de l'aliment déterminé sélectionné par l'utilisateur.

De tels procédés permettent d'adapter les durées de cuisson correspondant à chaque état de cuisson à coeur en tenant compte de la sélection par l'utilisateur de la fonction de marquage de l'aliment déterminé.

On évite ainsi une sur-cuisson de l'aliment tout en accentuant le marquage de l'aliment déterminé.

Ce marquage sera en outre rendu davantage homogène sur les deux faces de l'aliment au contact des plaques de cuisson quel que soit l'état de cuisson à coeur au cours duquel l'utilisateur retire l'aliment d'entre les plaques de cuisson.

Selon une mise en oeuvre de l'un ou l'autre de ces procédés, la détermination de la ou des durées de cuisson de l'aliment déterminé lorsque la fonction de marquage de l'aliment déterminé est activée utilise une loi de cuisson prédéterminée établie à partir de données expérimentales, ou bien utilise une table de calcul, ladite loi de cuisson ou ladite table de calcul étant préenregistrée en usine, avant la première utilisation opérationnelle de l'appareil de cuisson électrique.

Selon une mise en oeuvre de l'un ou l'autre de ces procédés, la loi de cuisson est obtenue par une méthode de calcul par corrélation quadratique ou linéaire.

Selon une mise en oeuvre de l'un ou l'autre de ces procédés, en plus de l'une au moins des valeurs de température de cuisson interne parmi celles mises en mémoire et de l'activation de la fonction de marquage de l'aliment déterminé par l'utilisateur, la détermination de la ou des durées de cuisson de l'aliment est également réalisée en fonction de l'épaisseur de l'aliment déterminé, et/ou de la surface d'occupation par l'aliment déterminé sur les plaques de cuisson.

Selon une mise en oeuvre de l'un ou l'autre de ces procédés, chaque valeur de température de cuisson interne de l'aliment déterminé mise en mémoire est une constante préenregistrée en usine, avant la première utilisation opérationnelle de l'appareil de cuisson électrique.

Selon une mise en oeuvre de l'un ou l'autre de ces procédés, la détermination de la ou des durées de cuisson de l'aliment déterminé au cours de la phase de cuisson est fonction de ladite surface d'occupation de l'aliment déterminé sur la plaque de cuisson supérieure, laquelle est obtenue par des mesures de températures de la plaque de cuisson supérieure.

Selon une mise en oeuvre de l'un ou l'autre de ces procédés, pour estimer la surface d'occupation par l'aliment déterminé, on utilise un élément de mesure de température de la plaque de cuisson supérieure disposé à l'écart d'une zone de contact de l'aliment déterminé, et consécutivement à la mise en contact de l'aliment avec la plaque de cuisson supérieure on mesure :

- la température de la plaque de cuisson supérieure, et on compare à au moins un seuil de référence une durée au cours de laquelle il est constaté une baisse de température, ou
- une durée prédéterminée de stabilisation de la température mesurée.

Selon une mise en oeuvre de l'un ou l'autre de ces procédés, lorsque la fonction de marquage est activée alors une unique température de consigne de la plaque de cuisson inférieure et de la plaque de cuisson supérieure est appliquée au cours de la phase de cuisson tandis que lorsque la fonction de marquage n'est pas activée alors au moins deux températures de consignes de la plaque de cuisson inférieure et de la plaque de cuisson supérieure sont appliquées au cours de la phase de cuisson.

Selon une mise en oeuvre de l'un ou l'autre de ces procédés, lorsque la fonction de marquage n'est pas activée alors un basculement depuis une première température de consigne vers une deuxième température de consigne de la plaque de cuisson inférieure et de la plaque de cuisson supérieure est opéré lorsque la dérivée d'une température mesurée de la plaque de cuisson supérieure change de signe.

Selon une mise en oeuvre de l'un ou l'autre de ces procédés, la première température de consigne de la plaque de cuisson inférieure et de la plaque de cuisson supérieure lorsque la fonction de marquage n'est pas activée est supérieure à une température de consigne appliquée au cours d'une phase de préchauffage de l'appareil de cuisson électrique, et la deuxième température de consigne de la plaque de cuisson inférieure et de la plaque de cuisson supérieure est inférieure à la température de consigne appliquée au cours de la phase de préchauffage.

Selon une mise en oeuvre de l'un ou l'autre de ces procédés, l'unique température de consigne de la plaque de cuisson inférieure et de la plaque de cuisson supérieure lorsque la fonction de marquage est activée est supérieure à la température de consigne appliquée au cours d'une phase de préchauffage de l'appareil de cuisson électrique.

Selon une mise en oeuvre de l'un ou l'autre de ces procédés, les différentes températures de consigne de préchauffage et de cuisson diffèrent selon le type d'aliment déterminé.

Selon une mise en oeuvre de l'un ou l'autre de ces procédés, lorsque la fonction de marquage est activée alors la régulation de température de la plaque de cuisson inférieure et de la plaque de cuisson supérieure au cours de la phase de cuisson est réalisée à partir de l'information renvoyée par un élément de mesure de température de la plaque de cuisson inférieure.

Par ailleurs, l'invention se rapporte également à un appareil de cuisson électrique pour la mise en oeuvre d'un procédé tel que décrit précédemment, l'appareil de cuisson électrique comprenant une plaque de cuisson inférieure et une plaque de cuisson supérieure pour chauffer à leur contact un aliment déterminé au cours d'une phase de cuisson, caractérisé en ce qu'il comprend, pour réaliser un marquage de la surface de l'aliment alors souhaité par l'utilisateur, et pour atteindre un état de cuisson à coeur de l'aliment déterminé souhaité par un utilisateur :

- une mémoire pour stocker selon un ordre croissant des valeurs de différentes températures de cuisson internes de l'aliment déterminé, lesdites valeurs de différentes températures de cuisson interne correspondant chacune à un état de cuisson à coeur de l'aliment déterminé, et pour stocker des températures de consigne de préchauffage à appliquer au cours d'une phase de préchauffage et au moins une température de consigne de cuisson à appliquer au cours d'une phase de cuisson,
- des moyens de détermination de l'épaisseur de l'aliment déterminé alors disposé au contact des plaques de cuisson et/ou des moyens d'estimation de la surface occupée par cet aliment déterminé sur les plaques de cuisson,
- des moyens d'activation d'une fonction de marquage de l'aliment déterminé ;
- des moyens de traitement agencés pour sélectionner une température de consigne de préchauffage à appliquer au cours d'une phase de préchauffage et au moins une température de consigne de cuisson à appliquer au cours d'une phase de cuisson parmi celles stockées dans la mémoire en fonction de l'aliment déterminé et de l'activation de la fonction de marquage de l'aliment déterminé, et pour déterminer au moins une durée de cuisson de l'aliment déterminé ainsi disposé en fonction :

    * de l'une au moins des valeurs de température de cuisson interne parmi celles mises en mémoire,
    * de l'épaisseur de l'aliment déterminé, et/ou d'une surface d'occupation par l'aliment déterminé, et
    * de l'activation de la fonction de marquage de l'aliment déterminé par l'utilisateur à partir des moyens d'activation de cette fonction,

- des moyens d'indication à l'utilisateur, par l'appareil de cuisson électrique, de l'atteinte de l'état de cuisson à coeur correspondant.

Le fait que la détermination de l'au moins une durée de cuisson soit dépendante de l'activation de la fonction de marquage de l'aliment déterminé permet d'ajuster la cuisson de l'aliment déterminé lors du choix de la fonction de marquage quel que soit l'état de cuisson à coeur désiré par l'utilisateur.

Cela permet également d'homogénéiser davantage le marquage de l'aliment déterminé sur ces deux faces.

Nous aurons donc des durées de cuisson qui seront différentes pour un même état de cuisson à coeur et des mêmes caractéristiques d'aliment déterminé selon que la fonction de marquage de l'aliment déterminé aura été activée ou non.

Selon un aspect de l'invention, l'appareil de cuisson comprend un commutateur électrique inférieur apte à autoriser ou à interrompre l'alimentation électrique d'un élément chauffant électrique inférieur et un commutateur électrique supérieur apte à autoriser ou à interrompre l'alimentation électrique d'un élément chauffant électrique supérieur.

Selon un aspect de l'invention, au moins un programme de cuisson se définit avec :

- une température de consigne de la phase de préchauffage, et au moins une température de consigne et au moins une durée de cuisson de l'au moins une phase de cuisson appliquées à l'élément chauffant électrique inférieure, et
- une température de consigne de la phase de préchauffage, et au moins une température de consigne et au moins une durée de cuisson de la phase de cuisson appliquées à l'élément chauffant électrique supérieur,

les moyens de traitement étant agencés pour piloter indépendamment le commutateur électrique inférieur et le commutateur électrique supérieur pendant la phase de préchauffage et/ou pendant la phase de cuisson.

Selon un aspect de l'invention, pour un même programme de cuisson la température de consigne de la phase de préchauffage et l'au moins une température de consigne de la phase de cuisson appliquées à l'élément chauffant électrique inférieure diffèrent respectivement de la température de consigne de la phase de préchauffage et de l'au moins une température de consigne de la phase de cuisson appliquées à l'élément chauffant électrique supérieur.

Cette disposition permet de mieux maitriser le marquage de manière indépendante sur la face supérieure et sur la face inférieure de l'aliment déterminé.

D'autres caractéristiques et avantages de l'invention ressortiront clairement de la description qui en est faite ci-après, dans le cas d'une utilisation commune des trois paramètres précités (X,Y,Z) pour la cuisson d'un type d'aliment déterminé selon que l'activation S d'une fonction de marquage est appliquée ou non, et ce à titre indicatif et nullement limitatif, en référence aux dessins annexés.

La figure 1 illustre une vue dans une position ouverte de l'appareil de cuisson électrique selon l'invention.

La figure 2 illustre une vue dans une position ouverte de l'appareil de cuisson électrique selon l'invention auquel ont été retiré les plaques de cuisson.

La figure 3 est une vue de face dans une position fermée de l'appareil de cuisson électrique selon l'invention.

La figure 4 est une vue agrandie sur une interface utilisateur de l'appareil de cuisson électrique selon l'invention.

La figure 5 est un graphe représentatif des paramètres de l'appareil de cuisson électrique et des variables mesurées pour un menu boeuf sélectionné par l'utilisateur lorsque la fonction de marquage n'a pas été activée.

La figure 6 est un graphe représentatif des paramètres de l'appareil de cuisson électrique et des variables mesurées pour un menu boeuf sélectionné par l'utilisateur lorsque la fonction de marquage a été activée.

Un appareil de cuisson électrique 1 comprend de manière usuelle une alimentation électrique (non illustré) permettant de raccorder l'appareil de cuisson électrique 1 à un réseau électrique en vue de l'alimenter en énergie.

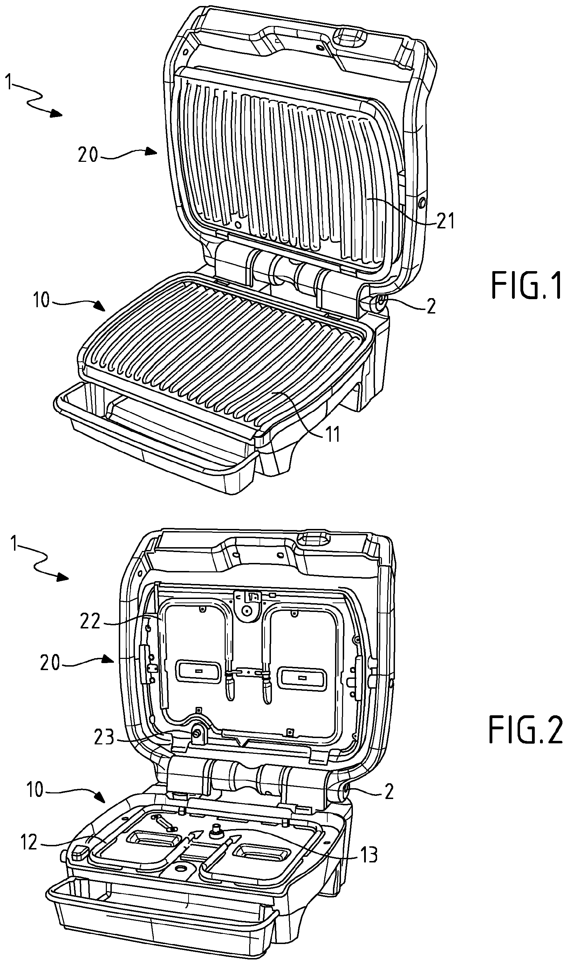

Comme illustré particulièrement aux figures 1 et 2, l'appareil de cuisson électrique 1 comprend en outre une partie inférieure 10 et une partie supérieure 20.

La partie inférieure 10 est reliée à la partie supérieure 20 par une articulation 2 du type charnière.

Comme illustrée particulièrement à la figure 1, la partie inférieure 10 comporte une plaque de cuisson inférieure 11 apte à recevoir l'aliment et à venir au contact de la face inférieure de l'aliment, et la partie supérieure 20 comporte une plaque de cuisson supérieure 21 apte à être déplacée relativement à la plaque de cuisson inférieure 11, notamment par le biais de l'articulation 2, de manière à venir au contact de la face supérieure de l'aliment disposé sur la plaque de cuisson inférieure 11.

L'articulation permet de déplacer la partie supérieure 20 relativement à la partie inférieure 10 pour définir :

- une position de contact de la plaque de cuisson inférieure 11 et de la plaque de cuisson supérieure 21 dans laquelle est notamment réalisée une phase de préchauffage de l'appareil de cuisson électrique 1,
- une position ouverte permettant de disposer les aliments sur la plaque de cuisson inférieure 11 ; et
- une position fermée dans laquelle les aliments sont enserrés entre la plaque de cuisson inférieure 11 et la plaque de cuisson supérieure 21.

La position fermée définit un écartement des plaques au cours d'une phase de cuisson.

Cet écartement des plaques de cuisson inférieure 11, supérieure 21 correspond à l'épaisseur maximale des aliments disposés entre les plaques de cuisson inférieure 11, supérieure 21 dans la position fermée.

Cette épaisseur Y est variable et peut être mesurée par un dispositif de mesure d'épaisseur (non illustré) renvoyant une valeur d'épaisseur Y des aliments.

Le dispositif de mesure d'épaisseur des aliments peut par exemple comprendre un potentiomètre et un balancier relié à, ou compris, dans l'articulation 2 reliant la partie inférieure 10 à la partie supérieure 20 de l'appareil de cuisson électrique 1.

D'autres types de dispositifs de mesure d'épaisseur des aliments peuvent également être utilisés, par exemple un capteur à effet Hall.

Par ailleurs, des moyens de traitement de l'appareil de cuisson électrique 1 peuvent utiliser une mesure directe de l'épaisseur Y renvoyée par ce dispositif pour appliquer un programme de cuisson ou bien affecter cette mesure à différentes plages de valeurs prédéfinies stockées dans la base de données et pour lesquelles le fonctionnement de l'appareil de cuisson électrique 1 est sensiblement le même lorsque deux valeurs d'épaisseur Y mesurées se situent dans une même plage de valeurs.

De tels moyens de traitement comprennent par exemple un processeur ou un contrôleur ou bien encore un microprocesseur.

Comme illustrée particulièrement à la figure 2, la partie inférieure 10 comporte également un élément chauffant électrique inférieur 12 apte à chauffer la plaque de cuisson inférieure 11, et un élément de mesure de température 13 de la plaque de cuisson inférieure 11.

Sur cette même figure 2, et de façon analogue, la partie supérieure 20 comporte également un élément chauffant électrique supérieur 22 apte à chauffer la plaque de cuisson supérieure 21, et un élément de mesure de température 23 de la plaque de cuisson supérieure 21.

Les éléments chauffants électriques 12, 22 sont par exemple des éléments résistifs chauffants, et les éléments de mesure de température 13, 23 sont des capteurs de température, par exemple du type capteur à coefficient de température négative.

Par ailleurs, l'appareil de cuisson électrique 1 comprend un premier commutateur électrique inférieur (non illustré) apte à autoriser ou à interrompre l'alimentation électrique de l'élément chauffant électrique inférieur 12 et un deuxième commutateur électrique supérieure (non illustré) apte à autoriser ou à interrompre l'alimentation électrique de l'élément chauffant électrique supérieur 22.

Un appareil de cuisson électrique 1 comprenant deux commutateurs électriques permet de contrôler de manière indépendante le chauffage de la plaque de cuisson inférieure 11 et le chauffage de la plaque de cuisson supérieure 21.

Typiquement, de tels commutateurs électriques sont par exemple des relais électriques de puissance.

Par ailleurs, les éléments de mesure de la température 13, 23 sont utilisés pour réaliser la régulation en température des plaques de cuisson 11, 21, notamment pendant une phase de préchauffage PP de l'appareil de cuisson 1.

L'élément de mesure de température 13 de la plaque de cuisson inférieure 11 est également utilisé pour réguler la température des plaques de cuissons inférieure 11, supérieure 21 au cours d'une phase de cuisson PC de l'aliment, et l'élément de mesure de température 23 de la plaque de cuisson supérieure 21 est utilisé pour estimer la surface d'occupation Z de l'aliment sur la plaque de cuisson supérieure 21.

Il est également envisageable de réguler la température de la plaque de cuisson inférieure 11 et de la plaque de cuisson supérieure 21 sur des températures de consigne différentes de manière à mieux maitriser l'homogénéité du marquage d'un aliment déterminé A.

La surface d'occupation de l'aliment sur la plaque de cuisson supérieure 21 est estimée par les moyens de traitements à partir de la durée de baisse de température déterminée par les mesures de températures réalisées par l'élément de mesure de la température 23 de la plaque de cuisson supérieure 21 après la phase de préchauffage, notamment au début de la phase de cuisson PC lorsque l'aliment est mis au contact de la plaque de cuisson supérieure 21.

Comme illustré sur la figure 2, afin de déterminer la durée moyenne de baisse de température provoquée par un ou plusieurs aliments répartis sur la surface de la plaque de cuisson supérieure 21 alors l'élément de mesure de température 23 de la plaque de cuisson supérieure 21 est excentré et agencé pour réaliser une mesure sur un bord de la plaque de cuisson supérieure 21.

Ainsi, la surface d'occupation de l'aliment estimée à partir de la durée de baisse de température pouvant être déterminée du fait de la proximité d'un seul aliment avec l'élément de mesure de température 23 de la plaque de cuisson supérieure est limitée. En effet, une telle durée de baisse de température ne serait pas représentative de la durée de baisse de température engendrée par l'ensemble des aliments disposés au contact de la plaque de cuisson supérieure 21.

L'élément de mesure de température 13 de la plaque de cuisson inférieure est quant à lui disposé de manière centrée par rapport à la plaque de cuisson inférieure 11.

Néanmoins, d'autres dispositions de ces éléments de mesure de température 13, 23 pourraient être envisagées.

L'appareil de cuisson électrique 1 comporte également une mémoire (non illustrée) dans laquelle sont enregistrées différentes valeurs de température X de cuisson interne d'un ou plusieurs aliments déterminés A correspondant chacune à un état de cuisson à coeur d'un aliment déterminé A.

Chaque valeur de température X de cuisson interne d'un aliment déterminé mise en mémoire est une constante préenregistrée en usine, avant la première utilisation opérationnelle de l'appareil de cuisson électrique 1.

Dans la mémoire, sont également stockées des températures de consigne de préchauffage Ta, TaS à appliquer au cours d'une phase de préchauffage PP et au moins une température de consigne de cuisson Ta+, Tb, TbS à appliquer au cours d'une phase de cuisson PC.

Enfin, l'appareil de cuisson électrique 1 comporte une interface utilisateur 30 agencée pour permettre à l'utilisateur de sélectionner certains paramètres permettant à l'appareil de cuisson électrique 1 de définir un programme de cuisson.

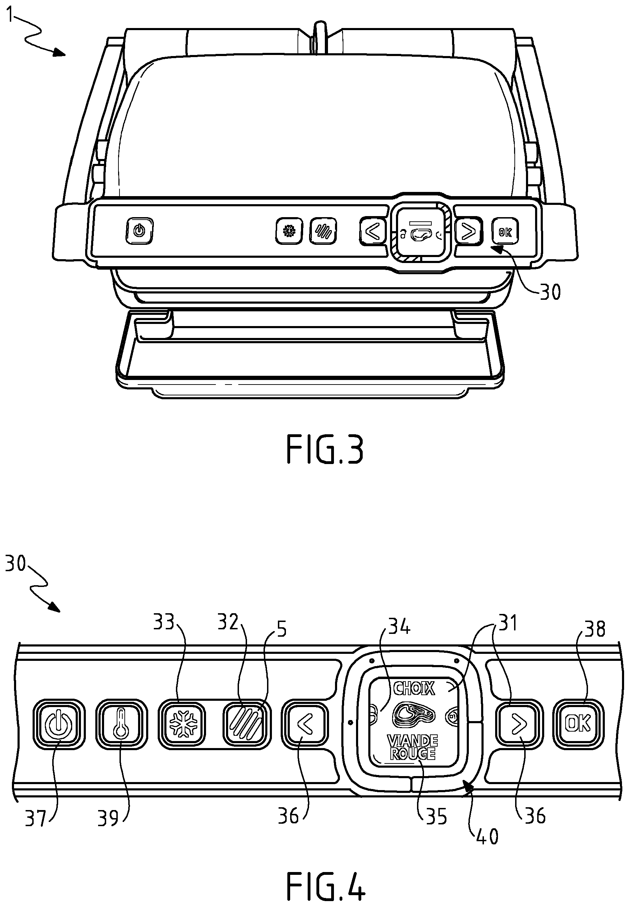

A cette fin, comme illustré à la figure 3 mais tout particulièrement à la figure 4, l'interface utilisateur 30 comprend un moyen de sélection 31 d'un type d'aliment déterminé A parmi une pluralité de types d'aliments déterminés A, et un bouton d'actionnement 32 d'une fonction de marquage S des surfaces inférieure et supérieure de l'aliment déterminé disposé au contact de la plaque de cuisson inférieure 11 et de la plaque de cuisson supérieure 21.

L'appui sur ce bouton d'actionnement 32 d'une fonction de marquage S permet ainsi de définir un paramétrage supplémentaire pour un programme de cuisson.

L'interface utilisateur 30 comprend également un bouton d'actionnement 33 d'une fonction d'aliment congelé qui peut être actionnée par l'utilisateur lorsque l'aliment est introduit entre les plaques de cuisson inférieure 11, supérieure 21 alors qu'il se trouve dans un état de congélation.

L'appui sur ce bouton d'actionnement 33 d'une fonction d'aliment congelé permet ainsi de définir un paramétrage supplémentaire pour un programme de cuisson.

Pour sélectionner le type d'aliment à cuire, le moyen de sélection 31 du modèle d'appareil de cuisson électrique 1 présenté aux figures 3 et 4 comporte un écran 34, notamment du type TFT, apte à afficher des icones 35 proposant des types d'aliment déterminés A à l'utilisateur.

L'utilisateur en utilisant des boutons fléchés 36 a la possibilité de naviguer dans un carrousel pour lui permettre de faire défiler les diverses icones 35 représentant chacune un type d'aliment déterminé A.

L'interface utilisateur 30 comprend également un bouton marche/arrêt 37 de l'appareil de cuisson électrique 1, un bouton de validation 38 d'une sélection d'un type d'aliment déterminé A, et un bouton de passage en mode manuel 39 qui permet à l'utilisateur de faire varier manuellement une température de consigne pour la phase de cuisson PC s'affichant sur l'écran 34, ladite température de consigne étant ajustable à l'aide des boutons fléchés 36.

Ainsi, un programme de cuisson se définit en entrée par une combinaison :

- de valeurs constantes prédéterminées, notamment les différentes valeurs de températures (X) de cuisson interne de l'aliment correspondant chacune à un état de cuisson à coeur d'un aliment déterminé (A),
- de valeurs de variables mesurées ou estimées par l'appareil de cuisson électrique 1, notamment l'épaisseur (Y) de l'aliment déterminé (A) mesurée par le dispositif de mesure d'épaisseur, et/ou la surface d'occupation (Z) de l'aliment déterminé (A) estimée à partir de la mesure du temps au cours duquel il est constaté une baisse de température produite lors du contact de l'aliment avec la plaque de cuisson supérieure 21, la dite baisse de température étant surveillée par l'élément de mesure de la température 23 de la plaque de cuisson supérieure 21,
- de différents paramètres d'entrée déclarées par l'utilisateur, notamment un aliment déterminé A à cuire ou un type d'aliment A à cuire ou encore un menu A parmi une liste prédéfinie, de l'activation ou non d'une fonction de marquage S de l'aliment, et optionnellement de l'activation ou non d'une fonction signalant l'état congelé de l'aliment.

A partir de ces valeurs constantes, de ces valeurs variables, et de ces paramètres d'entrée, les moyens de traitement de l'appareil de cuisson électrique 1 définissent un programme de cuisson, notamment en sélectionnant une température de consigne Ta, TaS de préchauffage à appliquer au cours de la phase de préchauffage PP et au moins une température de consigne de cuisson Ta+, Tb, TbS à appliquer au cours de la phase de cuisson PC parmi celles stockées dans la mémoire en fonction de l'aliment déterminé A et de l'activation de la fonction de marquage S de l'aliment déterminé A, et en déterminant au moins une durée de cuisson T.

L'exécution du programme de cuisson va donc consister à appliquer des températures de consignes de préchauffage au cours de la phase de préchauffage jusqu'à ce que l'utilisateur introduise un aliment déterminé A entre les plaques de cuisson inférieure 11, supérieure 21 ou bien jusqu'à ce qu'une fonction de sécurité de l'appareil de cuisson électrique 1, par exemple le dépassement d'une durée seuil, désactive les éléments chauffants électriques inférieur 12, supérieur 22 de l'appareil de cuisson électrique 1 et à appliquer des températures de consignes de cuisson au cours de la phase de cuisson de l'aliment déterminé A pendant des durées de cuisson T déterminées par les moyens de traitement

Dans le cas où la fonction de marquage S n'a pas été sélectionnée par l'utilisateur alors cette détermination des durées de cuisson peut être obtenue par une méthode de calcul de corrélation quadratique avec la fonction du second degré suivante :

$$(1): T_A(X,Y,Z)=A1(A)+A2(A)*X+A3(A)*Y+A4(A)*Z+A5(A)*X2+A6(A)*Y2+A7(A)*Z2+A8(A)*X*Y$$

$$+A9(A)*X*Z+A10(A)*Y*Z.$$

Les coefficients A1(A), A2(A), A3(A), A4(A), A5(A), A6(A), A7(A), A8(A), A9(A) et A10(A) sont prédéfinis pour chaque menu (A), pour des conditions de températures prédéfinies. Ils sont également stockés dans la mémoire de l'appareil de cuisson électrique 1. Ce sont des coefficients constants.

En variante, la détermination de la durée de cuisson T de l'aliment peut être obtenue par une méthode de calcul de corrélation linéaire avec la fonction du premier degré suivante :

$$(2): T_A(X,Y,Z)=B1(A)+B2(A)*X+B3(A)*Y+B4(A)*Z$$

Les coefficients B1(A), B2(A), B3(A), et B4(A) sont prédéfinis pour chaque menu (A), pour des conditions de températures prédéfinies. Ils sont également stockés dans la mémoire de l'appareil de cuisson électrique 1. Ce sont des constantes.

Dans le cas où la fonction de marquage S a été activée par l'utilisateur alors cette détermination des durées de cuisson peut être obtenue par une méthode de calcul de corrélation quadratique avec la fonction du second degré suivante :

$$(1): T_{A,S}(X,Y,Z)=A1(A, S)+A2(A, S)*X+A3(A, S)*Y+A4(A, S)*Z+A5(A, S)*X2+A6(A, S)*Y2+A7(A, S)*Z2+A8(A, S)*X*Y+A9(A, S)*X*Z+A10(A, S)*Y*Z.$$

Les coefficients A1(A, S), A2(A, S), A3(A, S), A4(A, S), A5(A, S), A6(A, S), A7(A, S), A8(A, S), A9(A, S) et A10(A, S) sont prédéfinis pour chaque menu (A), pour des conditions de températures prédéfinies. Ils sont stockés dans la mémoire de l'appareil de cuisson électrique 1. Ce sont des coefficients constants.

En variante, la détermination de la durée de cuisson T de l'aliment peut être obtenue par une méthode de calcul de corrélation linéaire avec la fonction du premier degré suivante :

$$(2): T_{A, S}(X,Y,Z)=B1(A, S)+B2(A, S)*X+B3(A, S)*Y+B4(A, S)*Z$$

Les coefficients B1(A, S), B2(A, S), B3(A, S), et B4(A, S) sont prédéfinis pour chaque menu (A), pour des conditions de températures prédéfinies. Ils sont stockés dans la mémoire de l'appareil de cuisson électrique 1. Ce sont des constantes.

La méthode de corrélation quadratique est préférée à l'autre car, elle englobe davantage de points expérimentaux et procure donc un meilleur résultat.

Tous ces coefficients sont déterminés expérimentalement.

Ces programmes de cuisson sont déterminés et peuvent être exécutés par les moyens de traitement de l'appareil de cuisson électrique 1.

On comprend que compte tenu des différents paramètres et valeurs utilisés, l'appareil de cuisson électrique 1 est en mesure d'exécuter une grande diversité de programmes de cuisson.

Enfin, l'interface utilisateur 30 comprend un moyen d'information 40 de l'état de cuisson à coeur de l'aliment au fur et à mesure de l'avancement de la phase de cuisson PC et/ou du temps restant jusqu'à une transition vers un état de cuisson ultérieur.

Ce moyen d'information 40 comprend un référentiel de couleur disposé autour de l'écran 34. Chaque couleur de ce référentiel est associé à une valeur de température de cuisson interne de l'aliment déterminé A et donc à un état de cuisson à coeur de l'aliment déterminé A.

Lors de la phase de cuisson de l'aliment déterminé A, une flèche (non illustrée) est affichée sur le bord de l'écran 34 et se déplace au fur et à mesure de l'avancement du programme de cuisson de manière que cette flèche pointe sur l'état de cuisson à coeur dans lequel se trouve l'aliment déterminé A au cours de la phase de cuisson PC.

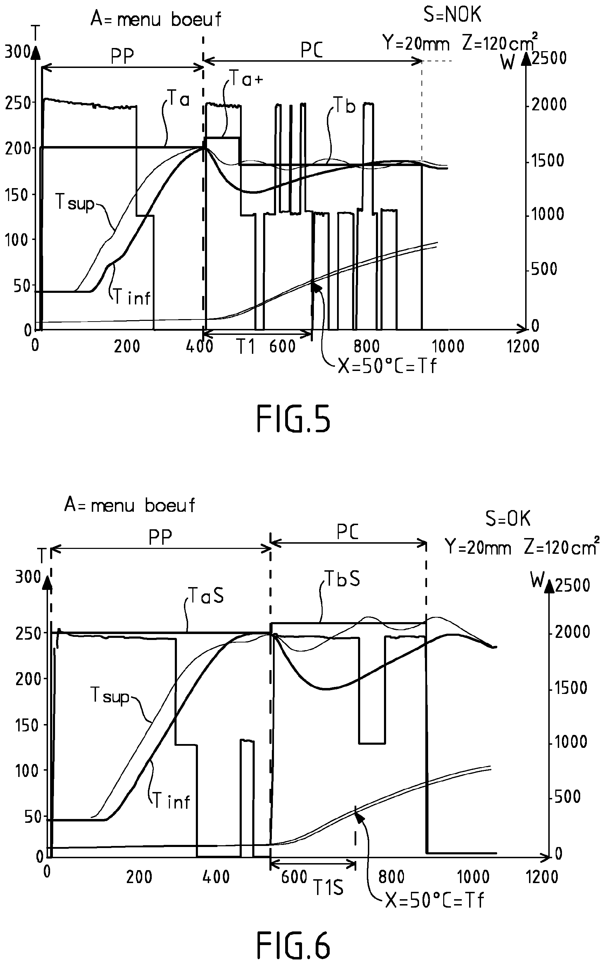

Le fonctionnement de l'appareil de cuisson électrique 1 est détaillé ci-après en référence aux figures 5 à 6 pour une sélection par l'utilisateur du boeuf comme aliment déterminé A pour la cuisson de deux steaks de boeuf de 2 cm d'épaisseur et présentant une surface de 60 cm$^2$ chacun.

Dans le cas où l'utilisateur n'a pas activé la fonction de marquage S alors après avoir sélectionné le menu boeuf via le moyen de sélection 31, les moyens de traitement appliquent une température de consigne Ta de la plaque de cuisson inférieure 11 et de la plaque de cuisson supérieure 21 au cours de la phase de préchauffage PP.

Au cours de cette phase de préchauffage PP, l'appareil de cuisson électrique 1 se trouve dans sa position de contact.

Dans l'exemple proposé, la température de consigne Ta au cours de la phase de préchauffage PP est de 200 °C.

On remarque qu'au cours de cette phase de préchauffage PP, les deux commutateurs électriques pour le chauffage de la plaque de cuisson inférieure 11 et pour le chauffage de la plaque de cuisson supérieure 21 sont d'abord dans leur état fermé puis le commutateur électrique pour le chauffage de la plaque de cuisson supérieure 21 bascule vers son état ouvert suivi par le commutateur électrique pour le chauffage de la plaque de cuisson inférieure 11.

Ces basculements de l'état des commutateurs électriques sont réalisés pour anticiper la montée en température vers la température de consigne Ta de la plaque de cuisson supérieure 21 et de la plaque de cuisson inférieure 11 du fait de l'inertie thermique.

Comme illustré sur le graphe de la figure 5, on remarque également que la température Tsup de la plaque de cuisson supérieure 21 est supérieure à la température Tinf de la plaque de cuisson inférieure 11 sur toute la période de montée en température. Néanmoins, à la fin de la phase de préchauffage la température Tinf de la plaque de cuisson inférieure 11 est sensiblement identique à la température Tsup de la plaque de cuisson supérieure 21.

A la fin de la phase de préchauffage PP, l'appareil de cuisson électrique 1 émet un signal sonore et/ou visuel pour signaler à l'utilisateur que la température des plaques Tinf, Tsup est appropriée pour initier la phase de cuisson PC.

L'utilisateur amène alors l'appareil de cuisson électrique 1 vers sa position ouverte, enfourne les deux pièces de boeuf puis amène l'appareil de cuisson électrique 1 vers sa position fermée.

Dans cette position fermée, les deux pièces de boeuf se retrouvent au contact de la plaque de cuisson supérieure 21 et de la plaque de cuisson inférieure 11.

La phase de cuisson PC débute à ce moment-là.

Comme illustré sur le graphe de la figure 5, la température Tsup de la plaque de cuisson supérieure 21 et la température Tinf de la plaque de cuisson inférieure 11 chutent dans un premier temps avant de se stabiliser puis de remonter.

Une durée au cours de laquelle il est constaté une baisse de température Tsup produite lors du contact de l'aliment avec la plaque de cuisson supérieure est déterminée par les moyens de traitement à partir des températures mesurées par l'élément de mesure de température 23 de la plaque de cuisson supérieure 21.

Cela permet ensuite aux moyens de traitement d'en déduire une valeur de surface d'occupation Z des deux steaks de boeuf sur la plaque de cuisson supérieure 21 en comparant cette durée à au moins un seuil de référence ou bien à une durée prédéterminée de stabilisation de la température Tsup mesurée.

Par exemple, la valeur de surface d'occupation Z est ici sensiblement égale à 2 X 60 cm$^2$ = 120 cm$^2$.

A l'enfournement des deux steaks de boeufs, au début de la phase de cuisson PC, le dispositif de mesure d'épaisseur détermine la valeur de l'épaisseur Y des deux steaks. Dans l'exemple présenté cette valeur est de 20 mm.

Ainsi, à partir de ces deux variables Y, Z, d'une valeur de température finale Tf égale à une valeur de température X prédéterminée de cuisson interne du boeuf par exemple égale à 50°C dans l'exemple présenté, et compte tenu du fait que l'utilisateur n'a pas sélectionné la fonction de marquage S, alors les moyens de traitement de l'appareil de cuisson électrique 1 définissent puis exécutent un programme de cuisson pour la cuisson des deux steaks de boeuf.

Comme illustré sur le graphe de la figure 5, ce programme de cuisson applique une première température de consigne Ta+ de la plaque de cuisson supérieure 21 et de la plaque de cuisson inférieure 11 et une deuxième température de consigne Tb de la plaque de cuisson supérieure 21 et de la plaque de cuisson inférieure 11.

La première température de consigne Ta+ de la plaque de cuisson supérieure 21 et de la plaque de cuisson inférieure 11 est supérieure à la température de consigne Ta appliquée au cours de la phase de préchauffage PP, et la deuxième température de consigne Tb de la plaque de cuisson supérieure 21 et de la plaque de cuisson inférieure 11 est inférieure à la température de consigne Ta appliquée au cours de la phase de préchauffage PP.

Typiquement, cette première température de consigne Ta+ est supérieure de 10°C à la température de consigne Ta appliquée au cours de la phase de préchauffage PP.

Lors de l'application de cette première température de consigne Ta+, les deux commutateurs électriques sont dans leur état fermé.

Cette augmentation de température de consigne permet de compenser la chute des température Tinf, Tsup mesurée sur les plaques de cuisson inférieure 11, supérieure 21 provoquée par introduction des steaks de boeuf.

Cette première température de consigne Ta+ est appliquée au cours de la phase de cuisson PC jusqu'à ce que la dérivée de la température Tsup mesurée de la plaque de cuisson supérieure change de signe, autrement dit lorsque la température Tsup mesurée commence à remonter.

A partir de ce moment-là, la deuxième température de consigne Tb est appliquée au cours de la phase de cuisson PC, et le commutateur électrique pour le chauffage de la plaque de cuisson supérieure 21 bascule vers son état ouvert suivi par le commutateur électrique pour le chauffage de la plaque de cuisson inférieure 11.

Typiquement, cette deuxième température de consigne Tb est inférieure de 20°C à la température de consigne Ta appliquée au cours de la phase de préchauffage PP.

La régulation aux températures de consignes Ta+, Tb de la température de la plaque de cuisson inférieure 11 et de la température de la plaque de cuisson supérieure 21 au cours de la phase de cuisson se fait de manière indépendante sur la base des informations de températures renvoyées par les éléments de mesure de température 13, 23.

Au cours de la régulation pendant la phase de cuisson PC, on remarque que la température Tinf de la plaque de cuisson inférieure 11 reste inférieure à la température Tsup de la plaque de cuisson supérieure 21.

Cette différence s'explique par l'écoulement des jus sur la plaque de cuisson inférieure 11 qui ainsi la refroidit.

On remarque également qu'au cours de la phase de cuisson PC le commutateur électrique pour le chauffage de la plaque de cuisson inférieure 11 est le plus souvent dans son état fermé de manière à compenser la différence de température avec la plaque de cuisson supérieure 21.

Le commutateur électrique pour le chauffage de la plaque de cuisson supérieure 21 présente quant à lui un cyclage plus important pour que la température Tsup de la plaque de cuisson supérieure 21 évolue autour de la deuxième température de consigne Tb.

Lors de la définition du programme de cuisson, les moyens de traitement ont également déterminé une première durée de cuisson T1 des steaks de boeufs pour qu'une valeur de température X de cuisson interne du boeuf soit par exemple égale à une température finale Tf=50°C, ce qui correspond par exemple à un état de cuisson à coeur « saignant ».

Dans l'exemple proposé, cette durée de cuisson débute au début de la phase de cuisson PC et est égale à 255 secondes, soit 4 min 15 secondes, pour une épaisseur Y mesurée de steak égale à 2 cm et une surface d'occupation de 120 cm$^2$ sans activation de la fonction de marquage S.

Au bout de cette durée T1, l'utilisateur reçoit une indication de l'état de cuisson à coeur de l'aliment sur le moyen d'information 40.

L'utilisateur peut également recevoir une information sur le temps restant jusqu'à l'atteinte de cette température finale Tf.

Le moyen d'information 40 peut également indiquer le temps restant jusqu'à une transition vers un état de cuisson ultérieur.

Dans le cas où l'utilisateur a activé la fonction de marquage S alors après avoir sélectionner le menu boeuf via le moyen de sélection 31, les moyens de traitement appliquent une température de consigne TaS de la plaque de cuisson inférieure 11 et de la plaque de cuisson supérieure 21 au cours de la phase de préchauffage PP.

Au cours de cette phase de préchauffage PP, l'appareil de cuisson électrique 1 se trouve dans sa position de contact.

Dans l'exemple proposé, la température de consigne TaS au cours de la phase de préchauffage PP est de 250 °C, soit 50°C de plus que lorsque la fonction de marquage S n'a pas été activée.

On remarque qu'au cours de cette phase de préchauffage PP, les deux commutateurs électriques pour le chauffage de la plaque de cuisson inférieure 11 et pour le chauffage de la plaque de cuisson supérieure 21 sont d'abord dans leur état fermé puis le commutateur électrique pour le chauffage de la plaque de cuisson supérieure 21 bascule vers son état ouvert suivi par le commutateur électrique pour le chauffage de la plaque de cuisson inférieure 11.

Le commutateur électrique pour le chauffage de la plaque de cuisson inférieure 11 bascule ensuite à nouveau vers son état fermé lorsque la pente de température Tinf de la plaque de cuisson inférieure 11 commence à diminuer.

Ces basculements de l'état des commutateurs électriques sont réalisés pour anticiper la montée et la descente en température vers la température de consigne Ta de la plaque de cuisson supérieure 21 et de la plaque de cuisson inférieure 11 du fait de l'inertie thermique des plaques de cuisson 11, 21.

Comme illustré sur le graphe de la figure 6, on remarque également que la température Tsup de la plaque de cuisson supérieure 21 est supérieure à la température Tinf de la plaque de cuisson inférieure 11 sur la majorité de la période de montée en température. Néanmoins, peu avant la fin de la phase de préchauffage, la température Tinf de la plaque de cuisson inférieure 11 est légèrement supérieure à la température Tsup de la plaque de cuisson supérieure 21 et ces deux températures Tinf, Tsup sont identiques à la fin de la phase de préchauffage PC.

A la fin de la phase de préchauffage PP, l'appareil de cuisson électrique 1 émet un signal sonore et/ou visuel pour signaler à l'utilisateur que la température des plaques Tinf, Tsup est appropriée pour initier la phase de cuisson PC.

L'utilisateur amène alors l'appareil de cuisson électrique 1 vers sa position ouverte, enfourne les deux pièces de boeufs puis amène l'appareil de cuisson électrique 1 vers sa position fermée.

Dans cette position fermée, les deux pièces de boeufs se retrouvent au contact de la plaque de cuisson supérieure 21 et de la plaque de cuisson inférieure 11.

La phase de cuisson PC débute à ce moment-là.

Comme illustré sur le graphe de la figure 6, la température Tsup de la plaque de cuisson supérieure 21 et la température Tinf de la plaque de cuisson inférieure 11 chutent dans un premier temps avant de se stabiliser puis de remonter.

Une durée au cours de laquelle il est constaté une baisse de température Tsup produite lors du contact de l'aliment avec la plaque de cuisson supérieure est déterminée par les moyens de traitement à partir des informations délivrées par l'élément de mesure de température 23 de la plaque de cuisson supérieure 21.

Cela permet ensuite aux moyens de traitement d'en déduire une valeur de surface d'occupation Z des deux steaks de boeufs sur la plaque de cuisson supérieure 21 en comparant cette durée à au moins un seuil de référence ou bien à une durée prédéterminée de stabilisation de la température Tsup mesurée.

Par exemple, la valeur Z de surface d'occupation est ici sensiblement égale à $2 \times 60 \text{ cm}^2 = 120 \text{ cm}^2$.

A l'enfournement des deux steaks de boeufs, au début de la phase de cuisson, le dispositif de mesure d'épaisseur détermine la valeur Y de l'épaisseur des deux steaks. Dans l'exemple présenté cette valeur est de 20 mm.

Ainsi, à partir de ces deux variables sur l'épaisseur Y et sur la surface d'occupation Z, et à partir de la constante sur la valeur de température prédéterminée X de cuisson interne du boeuf égale par exemple à une température finale Tf=50°C dans l'exemple présenté, et compte tenu du fait que l'utilisateur a sélectionné la fonction de marquage S, alors les moyens de traitement de l'appareil de cuisson électrique 1 définissent et exécutent un programme de cuisson pour la cuisson des deux steaks de boeufs.

Comme illustré sur le graphe de la figure 6, ce programme de cuisson applique une unique température de consigne TbS de la plaque de cuisson supérieure 21 et de la plaque de cuisson inférieure 11.

Cette température de consigne TbS est supérieure à la température de consigne TaS appliquée au cours de la phase de préchauffage PP.

Typiquement, cette température de consigne TbS est supérieure de 10°C à la température de consigne TaS appliquée au cours de la phase de préchauffage PP.

Lors de l'application de cette température de consigne TbS, les deux commutateurs électriques sont dans leur état fermé.

Cette augmentation de température de consigne permet de compenser la chute des température Tinf, Tsup mesurée sur les plaques de cuisson 11, 21 provoquée par introduction des steaks de boeufs.

Dans l'exemple présenté, cette température de consigne TbS est appliquée tout au long de la phase de cuisson PC.

Typiquement, cette température de consigne TbS est supérieure de 10°C à la température de consigne TaS appliquée au cours de la phase de préchauffage PP.

On remarque également que pour ce programme de cuisson particulier défini pour le menu boeuf, avec une épaisseur Y et une surface d'occupation Z particulières, alors les commutateurs électriques sont dans leur état fermé jusqu'à l'atteinte de la première durée de cuisson T1 correspondant à l'atteinte du premier état de cuisson à coeur de l'aliment.

Cela est valable particulièrement pour le menu boeuf dont la température de consigne TbS est la plus élevée.

On remarque que seule la température Tsup de la plaque de cuisson supérieure parvient à atteindre cette température de consigne TbS. Ainsi, seul le commutateur électrique supérieur bascule d'un état fermé vers un état ouvert pour le menu boeuf.

Bien entendu, pour une épaisseur et/ou une surface d'occupation Z plus faibles alors il y aura moins d'inertie et la température Tinf de la plaque de cuisson inférieure 11 et la température Tsup de la plaque de cuisson supérieure 21 seront en mesure d'atteindre cette température de consigne TbS.

De même, pour d'autres aliments déterminés A, si la température de consigne TbS présente une valeur inférieure à celle pour le menu boeuf alors la température Tinf de la plaque de cuisson inférieure 11 et la température Tsup de la plaque de cuisson supérieure 21 seront également en mesure d'atteindre cette température de consigne TbS.

Dans de tels cas, les commutateurs électriques vont réaliser un cyclage permettant à la température Tinf de la plaque de cuisson inférieure 11 et à la température Tsup de la plaque de cuisson supérieure 21 d'osciller autour de la température de consigne TbS.

La régulation à la température de consigne TbS de la température de la plaque de cuisson inférieure 11 et de la température de la plaque de cuisson supérieure 21 au cours de la phase de cuisson se fait de manière indépendante sur la base des informations de températures renvoyées par les éléments de mesure de température 13, 23.

Au cours de la régulation pendant la phase de cuisson PC, on remarque que la température Tinf de la plaque de cuisson inférieure 11 reste inférieure à la température Tsup de la plaque de cuisson supérieure 21.

Cette différence s'explique par l'écoulement des jus sur la plaque inférieure 11 qui ainsi la refroidit.

Lors de la définition du programme de cuisson, les moyens de traitement ont également déterminé une durée de cuisson T1S des steaks de boeufs pour qu'une valeur de température X de cuisson interne du boeuf soit égale par exemple à une température finale Tf=50°C, ce qui correspond par exemple à un état de cuisson à coeur « saignant ».

Dans l'exemple proposé, cette durée de cuisson T1S débute au début de la phase de cuisson PC et est égale à 210 secondes, soit 3 min 30 secondes, pour une épaisseur Y mesurée de steak égale à 2 cm et une surface d'occupation Z de 120 cm$^2$ avec l'activation de la fonction de marquage S.

On remarque donc que la durée de cuisson T1S lorsque la fonction de marquage S est activée est réduite par rapport à la durée de cuisson T1 lorsque la fonction de marquage S n'est pas activée, tout autre paramètre étant égal par ailleurs.

Au bout de cette durée de cuisson T1S, l'utilisateur reçoit une indication de l'état de cuisson à coeur de l'aliment déterminé sur le moyen d'information 40.

Que ce soit avec ou sans l'activation de la fonction de marquage S, si l'utilisateur ne retire pas l'aliment déterminé, alors la phase de cuisson PC continue jusqu'à atteindre une autre durée de cuisson déterminée par les moyens de traitement et qui correspond à l'atteinte d'une autre valeur de température X de cuisson interne plus élevée correspondant à un autre état de cuisson à coeur de l'aliment déterminé, par exemple la cuisson « à point » et ainsi de suite jusqu'à atteindre une durée de cuisson qui correspond à l'atteinte d'une ultime valeur de température X de cuisson interne correspondant à un ultime état de cuisson à coeur de l'aliment déterminé, par exemple la cuisson « bien cuit ».

Selon une variante non représentée, la valeur de température X de cuisson interne correspondant à un état de cuisson à coeur de l'aliment déterminé peut être sélectionnée au préalable par l'utilisateur via l'interface utilisateur 30.

Dans cette variante, la phase de cuisson se termine dès l'atteinte de la durée déterminée correspondant à l'atteinte de la valeur de température X de cuisson interne sélectionnée par l'utilisateur.

Bien entendu, dans le mode de réalisation et sa variante exposés ci-dessus, l'utilisateur doit retirer l'aliment au bout de la durée de cuisson déterminée de l'atteinte de la valeur de température X de cuisson interne désirée par l'utilisateur sans quoi l'inertie thermique des plaques de cuisson 11, 21 continuerait à cuire l'aliment.

Pour d'autres aliments déterminés A, ou avec une sélection d'autres types d'aliments, le comportement de l'appareil de cuisson électrique 1 est identique à celui exposé ci-dessus pour le menu boeuf à la différence près que les températures de consignes Ta, Ta+ ou Tb présentent des valeurs différentes inférieures à celles utilisées pour le menu boeuf. Le cyclage des commutateurs électriques est également plus fréquent car ces températures de consignes Ta, Ta+ ou Tb sont atteintes plus facilement que les températures de consignes Ta, Ta+ ou Tb appliquées pour le menu boeuf.

Bien que l'invention ait été décrite avec uniquement quelques exemples d'application de programmes de cuisson pour le boeuf, il est bien évident que l'invention n'y est nullement limitée, elle englobe au contraire tous les équivalents techniques des moyens décrits, dans la mesure où ils sont compris dans la portée des revendications.

C'est ainsi que d'autres valeurs constantes prédéterminées que les différentes valeurs de températures de cuisson internes X de l'aliment correspondant chacune à un état de cuisson à coeur d'un aliment déterminé pourraient être utilisées.

En effet, l'état de cuisson à coeur est surtout utilisé pour les viandes.

Cependant, pour d'autres types d'aliment A, notamment les légumes, il est possible de déterminer en laboratoire différentes valeurs de variations de perte en masse de l'aliment correspondant chacune à un état de cuisson de l'aliment du type légume.

**Revendications**

1. Procédé de mise en oeuvre d'une fonction de marquage (S) d'un aliment à partir d'un appareil de cuisson électrique (1) d'un aliment, tel un gril viande, comprenant une plaque de cuisson inférieure (11) et une plaque de cuisson supérieure (21) pour chauffer à leur contact un aliment déterminé (A) au cours d'une phase de cuisson (PC), **caractérisé en ce que** ce procédé comprend les étapes suivantes :

   - disposer d'une mémoire dans laquelle sont enregistrées et classées selon un ordre croissant des valeurs de différentes températures (X) de cuisson internes de l'aliment déterminé (A), lesdites valeurs de différentes températures (X) de cuisson interne correspondant chacune à un état de cuisson à coeur de l'aliment déterminé (A), et dans laquelle sont également stockées des températures de consigne de préchauffage (Ta, TaS) à appliquer au cours d'une phase de préchauffage (PP) et au moins une température de consigne de cuisson (Ta+, Tb, TbS) à appliquer au cours d'une phase de cuisson (PC),
   - activer une fonction de marquage (S) de l'aliment déterminé (A) pour réaliser un marquage de la surface de l'aliment déterminé (A) alors souhaité par l'utilisateur,
   - sélectionner une température de consigne de préchauffage (Ta, TaS) à appliquer au cours d'une phase de préchauffage (PP) et au moins une température de consigne de cuisson (Ta+, Tb, TbS) à appliquer au cours d'une phase de cuisson (PC) parmi celles stockées dans la mémoire en fonction de l'aliment déterminé (A) et de l'activation de la fonction de marquage (S) de l'aliment déterminé (A),
   - après une phase de préchauffage (PP), mettre en contact l'aliment déterminé (A) avec la plaque de cuisson inférieure (11) et la plaque de cuisson supérieure (21) pour démarrer la phase de cuisson (PC) dans le but d'atteindre au moins une des valeurs de température (X) de cuisson interne de l'aliment déterminé (A) alors souhaitée par un utilisateur, puis
   - déterminer une première durée de cuisson (T1) de l'aliment déterminé (A) au cours de la phase de cuisson (PC) en fonction de la première dans l'ordre croissant desdites valeurs de température (X) de cuisson interne de l'aliment déterminé (A) parmi les différentes valeurs de température (X) de cuisson interne de l'aliment déterminé (A) enregistrées et classées dans la mémoire, mais également en fonction de l'activation de la fonction de marquage (S) de l'aliment déterminé (A),
   - à l'issue de ladite première durée de cuisson (T1) déterminée, indiquer à l'utilisateur, par l'appareil de cuisson électrique (1), l'atteinte d'une première valeur de température (X) de cuisson interne correspondant à un premier état de cuisson à coeur de l'aliment déterminé (A), puis :
   - si l'utilisateur ne retire pas l'aliment, appliquer par l'appareil de cuisson électrique (1) une deuxième durée de cuisson déterminée de l'aliment déterminé (A) en fonction de la deuxième dans l'ordre croissant desdites valeurs de température (X) de cuisson interne de l'aliment déterminé (A) enregistrées et classées dans la mémoire, mais également en fonction de l'activation de la fonction de marquage (S) de l'aliment déterminé (A),
   - à l'issue de cette deuxième durée de cuisson déterminée, à nouveau indiquer à l'utilisateur, par l'appareil de cuisson électrique (1), l'atteinte de la deuxième valeur de température (X) de cuisson interne de l'aliment déterminé (A) correspondant à un deuxième état de cuisson à coeur de l'aliment déterminé (A),
   - et ainsi de suite si l'utilisateur ne retire pas l'aliment jusqu'à atteindre la dernière dans l'ordre croissant des dites valeurs de température (X) de cuisson interne de l'aliment déterminé (A) enregistrées et classées dans la mémoire correspondant à un dernier état de cuisson à coeur de l'aliment déterminé (A).

2. Procédé de mise en oeuvre d'une fonction de marquage (S) d'un aliment à partir d'un appareil de cuisson électrique (1) d'un aliment, tel un gril viande, comprenant une plaque de cuisson inférieure (11) et une plaque de cuisson supérieure (21) pour chauffer à leur contact un aliment déterminé (A) au cours d'une phase de cuisson (PC), **caractérisé en ce qu'**il comprend les étapes suivantes :

- disposer d'une mémoire dans laquelle sont enregistrées des valeurs de différentes valeurs de température (X) de cuisson interne de l'aliment déterminé (A), lesdites valeurs de différentes températures (X) de cuisson interne correspondant chacune à un état de cuisson à coeur de l'aliment déterminé (A), et dans laquelle sont également stockées des températures de consigne de préchauffage (Ta, TaS) à appliquer au cours d'une phase de préchauffage (PP) et au moins une température de consigne de cuisson (Ta+, Tb, TbS) à appliquer au cours d'une phase de cuisson (PC),

- activer une fonction de marquage (S) de l'aliment déterminé (A) pour réaliser un marquage de la surface de l'aliment déterminé (A) alors souhaité par l'utilisateur,

- sélectionner une température de consigne de préchauffage (Ta, TaS) à appliquer au cours d'une phase de préchauffage (PP) et au moins une température de consigne de cuisson (Ta+, Tb, TbS) à appliquer au cours d'une phase de cuisson (PC) parmi celles stockées dans la mémoire en fonction de l'aliment déterminé (A) et de l'activation de la fonction de marquage (S) de l'aliment déterminé,

- sélectionner un état de cuisson à coeur de l'aliment déterminé (A) correspondant à l'une desdites valeurs de température de cuisson interne,

- après une phase de préchauffage, mettre en contact l'aliment déterminé (A) avec la plaque de cuisson inférieure et la plaque de cuisson supérieure pour démarrer la phase de cuisson dans le but d'atteindre une valeur de température de cuisson interne de l'aliment déterminé (A) correspondant à un état de cuisson à coeur de l'aliment déterminé (A) préalablement sélectionné par un utilisateur, puis

- déterminer une durée de cuisson de l'aliment déterminé (A) au cours de la phase de cuisson en fonction de la valeur de température de cuisson interne correspondant à l'état de cuisson à coeur de l'aliment déterminé (A) sélectionné par l'utilisateur, mais également en fonction de l'activation de la fonction de marquage (S) de l'aliment déterminé (A),

- à l'issue de la durée de cuisson déterminée, indiquer par l'appareil de cuisson électrique (1) de l'atteinte de la valeur de température de cuisson interne correspondant à l'état de cuisson à coeur de l'aliment déterminé (A) sélectionné par l'utilisateur.

3. Procédé selon l'une des revendications 1 ou 2, dans lequel la détermination de la ou des durées de cuisson (T1, ...) de l'aliment déterminé (A) lorsque la fonction de marquage (S) de l'aliment déterminé (A) est activée utilise une loi de cuisson prédéterminée établie à partir de données expérimentales, ou bien utilise une table de calcul, ladite loi de cuisson ou ladite table de calcul étant préenregistrée en usine, avant la première utilisation opérationnelle de l'appareil de cuisson électrique (1).

4. Procédé selon la revendication 3, dans lequel la loi de cuisson est obtenue par une méthode de calcul par corrélation quadratique ou linéaire.

5. Procédé selon la revendication 1 à 4, dans lequel en plus de l'une au moins des valeurs de température (X) de cuisson internes parmi celles mises en mémoire et de l'activation de la fonction de marquage (S) de l'aliment déterminé (A) par l'utilisateur, la détermination de la ou des durées de cuisson (T1, ...) de l'aliment est également réalisée en fonction de l'épaisseur (Y) de l'aliment déterminé (A), et/ou de la surface d'occupation (Z) par l'aliment déterminé (A) sur les plaques de cuisson.

6. Procédé selon l'une des revendications 1 à 5, dans lequel chaque valeur de température (X) de cuisson interne de l'aliment déterminé (A) mise en mémoire est une constante préenregistrée en usine, avant la première utilisation opérationnelle de l'appareil de cuisson électrique (1).

7. Procédé selon l'une des revendications 1 à 6, dans lequel la détermination de la ou des durées de cuisson (T1, T2, ...) au cours de la phase de cuisson (PC) est fonction de la surface d'occupation (Z) par l'aliment déterminé (A), laquelle est obtenue par des mesures de températures (Tsup) de la plaque de cuisson supérieure (21).

8. Procédé selon la revendication 7, dans lequel, pour estimer la surface d'occupation (Z) par l'aliment déterminé (A), on utilise un élément de mesure de température (23) de la plaque de cuisson supérieure (21) disposé à l'écart d'une zone de contact de l'aliment déterminé (A), et consécutivement à la mise en contact de l'aliment avec la plaque de cuisson supérieure (21) on mesure :

- la température (Tsup) de la plaque de cuisson supérieure (21), et on compare à au moins un seuil de référence une durée au cours de laquelle il est constaté une baisse de température, ou
- une durée prédéterminée de stabilisation de la température (Tsup) mesurée.

**9.** Procédé selon l'une des revendications 1 à 8, dans lequel lorsque la fonction de marquage (S) de l'aliment est activée alors une unique température de consigne de cuisson (TbS) de la plaque de cuisson inférieure (11) et de la plaque de cuisson supérieure (21) est appliquée au cours de la phase de cuisson (PC) tandis que lorsque la fonction de marquage (S) n'est pas activée alors au moins deux températures de consignes (Ta+, Tb) de la plaque de cuisson inférieure (11) et de la plaque de cuisson supérieure (21) sont appliquées au cours de la phase de cuisson (PC).

**10.** Procédé selon la revendication 9, dans lequel lorsque la fonction de marquage (S) n'est pas activée alors un basculement depuis une première température de consigne (Ta+) vers une deuxième température de consigne (Tb) de la plaque de cuisson inférieure (11) et de la plaque de cuisson supérieure (21) est opéré lorsque la dérivée d'une température (Tsup) mesurée de la plaque de cuisson supérieure (21) change de signe.

**11.** Procédé selon la revendication 10, dans lequel la première température de consigne (Ta+) de la plaque de cuisson inférieure (11) et de la plaque de cuisson supérieure (21) lorsque la fonction de marquage (S) n'est pas activée est supérieure à une température de consigne (Ta) appliquée au cours d'une phase de préchauffage (PP) de l'appareil de cuisson électrique (1), et la deuxième température de consigne (Tb) de la plaque de cuisson inférieure (11) et de la plaque de cuisson supérieure (21) est inférieure à la température de consigne (Ta) appliquée au cours de la phase de préchauffage (PP).

**12.** Procédé selon l'une des revendications 9 à 10, dans lequel l'unique température de consigne (TbS) de la plaque de cuisson inférieure (11) et de la plaque de cuisson supérieure (21) lorsque la fonction de marquage (S) est activée est supérieure à la température de consigne (TaS) appliquée au cours d'une phase de préchauffage (PP) de l'appareil de cuisson électrique (1).

**13.** Procédé selon l'une des revendications 1 à 12, dans lequel les différentes températures de consigne de préchauffage (Ta, TaS) et de cuisson (Ta+, Tb, TbS) diffèrent selon le type d'aliment déterminé (A).

**14.** Procédé selon l'une des revendications 1 à 13, dans lequel lorsque la fonction de marquage (S) est activée alors la régulation de température de la plaque de cuisson inférieure (11) et de la plaque de cuisson supérieure (21) au cours de la phase de cuisson (PC) est réalisée à partir de l'information renvoyée par un élément de mesure la température (13) de la plaque de cuisson inférieure (11).

**15.** Appareil de cuisson électrique (1) pour la mise en oeuvre du procédé selon l'une des revendications 1 à 14, l'appareil de cuisson électrique (1) comprenant une plaque de cuisson inférieure (11) et une plaque de cuisson supérieure (21) pour chauffer à leur contact un aliment déterminé (A) au cours d'une phase de cuisson (PC), **caractérisé en ce qu'**il comprend, pour réaliser un marquage de la surface de l'aliment déterminé alors souhaité par l'utilisateur, et pour atteindre un état de cuisson à coeur de l'aliment déterminé (A) souhaitée par un utilisateur :

- une mémoire pour stocker selon un ordre croissant des valeurs de différentes températures (X) de cuisson internes de l'aliment déterminé (A), lesdites valeurs de différentes températures (X) de cuisson interne correspondant chacune à un état de cuisson à coeur de l'aliment déterminé (A), et pour stocker des températures de consigne de préchauffage (Ta, TaS) à appliquer au cours d'une phase de préchauffage (PP) et au moins une température de consigne de cuisson (Ta+, Tb, TbS) à appliquer au cours d'une phase de cuisson (PC),
- des moyens de détermination de l'épaisseur (Y) de l'aliment alors disposé au contact des plaques de cuisson et/ou des moyens d'estimation de la surface d'occupation (Z) par cet aliment déterminé (A) sur les plaques de cuisson (11, 21),

- des moyens d'activation d'une fonction de marquage (S) de l'aliment déterminé (A) ;
- des moyens de traitement agencés pour sélectionner une température de consigne de préchauffage (Ta, TaS) à appliquer au cours d'une phase de préchauffage (PP) et au moins une température de consigne de cuisson (Ta+, Tb, TbS) à appliquer au cours d'une phase de cuisson (PC) parmi celles stockées dans la mémoire en fonction de l'aliment déterminé (A) et de l'activation de la fonction de marquage (S) de l'aliment déterminé, et pour déterminer au moins une durée de cuisson (T1, ...) de l'aliment déterminé (A) ainsi disposé en fonction :

* de l'une au moins des valeurs de température (X) de cuisson internes parmi celles mises en mémoire,
* de l'épaisseur (Y) de l'aliment, et/ou de la surface d'occupation (Z) par l'aliment, et
* de l'activation de la fonction de marquage (S) de l'aliment par l'utilisateur à partir des moyens d'activation de cette fonction,

- des moyens d'indication à l'utilisateur, par l'appareil de cuisson électrique (1), de l'atteinte de l'état de cuisson à coeur correspondant.

**16.** Appareil de cuisson selon la revendication 15 comprenant un commutateur électrique inférieur apte à autoriser ou à interrompre l'alimentation électrique de l'élément chauffant électrique inférieur (12) et un commutateur électrique supérieur apte à autoriser ou à interrompre l'alimentation électrique de l'élément chauffant électrique supérieur (22).

**17.** Appareil de cuisson selon la revendication 16 dans lequel au moins un programme de cuisson se définit avec :

- une température de consigne de la phase de préchauffage (PP), et au moins une température de consigne et au moins une durée de cuisson de l'au moins une phase de cuisson (PC) appliquées à l'élément chauffant électrique inférieure (12), et
- une température de consigne de la phase de préchauffage (PP), et au moins une température de consigne et au moins une durée de cuisson d'une phase de cuisson (PC) appliquées à l'élément chauffant électrique supérieur (22),

les moyens de traitement étant agencés pour piloter indépendamment le commutateur électrique inférieur et le commutateur électrique supérieur pendant la phase de préchauffage (PP) et/ou pendant la phase de cuisson (PC).

**18.** Appareil de cuisson (1) selon la revendication 17, dans lequel pour un même programme de cuisson la température de consigne de la phase de préchauffage (PP) et l'au moins une température de consigne de la phase de cuisson appliquées à l'élément chauffant électrique inférieure (12) diffèrent respectivement de la température de consigne de la phase de préchauffage (PP) et de l'au moins une température de consigne de la phase de cuisson (PC) appliquées à l'élément chauffant électrique supérieure (22).

**Patentansprüche**

**1.** Verfahren zur Ausführung einer Markierungsfunktion (S) eines Lebensmittels ausgehend von einer elektrischen Kocheinrichtung (1) eines Lebensmittels, wie eines Fleischgrills, umfassend eine untere Kochplatte (11) und eine obere Kochplatte (21) zum Erwärmen eines bestimmten Lebensmittels (A) bei deren Kontakt im Laufe einer Kochphase (PC), **dadurch gekennzeichnet, dass** dieses Verfahren die folgenden Schritte umfasst:

- Anordnen eines Speichers, in dem in einer aufsteigenden Reihenfolge Werte unterschiedlicher innerer Kochtemperaturen (X) des bestimmten Lebensmittels (A) aufgezeichnet und klassifiziert sind, wobei die Werte unterschiedlicher innerer Kochtemperaturen (X) jeweils einem Garzustand des bestimmten Lebensmittels (A) entsprechen, und wobei ebenfalls Vorwärm-Solltemperaturen (Ta, TaS), die im Laufe einer Vorwärmphase (PP) anzuwenden sind, und mindestens eine Kochsolltemperatur (Ta+, Tb, TbS), die im Laufe einer Kochphase (PC) anzuwenden ist, gespeichert sind,
- Aktivieren einer Markierungsfunktion (S) des bestimmten Lebensmittels (A), um eine dann von dem Benutzer gewünschte Markierung der Oberfläche des bestimmten Lebensmittels (A) durchzuführen,
- Auswählen einer Vorwärm-Solltemperatur (Ta, TaS), die im Laufe einer Vorwärmphase (PP) anzuwenden ist, und mindestens einer Kochsolltemperatur (Ta+, Tb, TbS), die im Laufe einer Kochphase (PC) anzuwenden ist, aus jenen, die im Speicher gespeichert sind, in Abhängigkeit von dem bestimmten Lebensmittel (A) und von der Aktivierung der Markierungsfunktion (S) des bestimmten Lebensmittels (A),
- nach einer Vorwärmphase (PP), Setzen des bestimmten Lebensmittels (A) in Kontakt mit der unteren Kochplatte (11) und der oberen Kochplatte (21), um die Kochphase (PC) mit dem Ziel einzuleiten, mindestens einen der Werte der inneren Kochtemperatur (X) des bestimmten Lebensmittels (A), der dann von einem Benutzer gewünscht wird, zu erreichen, danach
- Bestimmen einer ersten Kochdauer (T1) des bestimmten Lebensmittels (A) im Laufe der Kochphase (PC) in Abhängigkeit von dem ersten in der aufsteigenden Reihenfolge der Werte innerer Kochtemperatur (X) des bestimmten Lebensmittels (A) aus den unterschiedlichen Werten innerer Kochtemperatur (X) des bestimmten Lebensmittels (A), die im Speicher aufgezeichnet und klassifiziert sind, aber auch in Abhängigkeit von der Aktivierung der Markierungsfunktion (S) des bestimmten Lebensmittels (A),
- nach Abschluss der ersten bestimmten Kochdauer (T1), Anzeigen,

durch die elektrische Kocheinrichtung (1) an den Benutzer, des Erreichens eines ersten Werts innerer Kochtemperatur (X), der einem ersten Garzustand des bestimmten Lebensmittels (A) entspricht, danach:

- wenn der Benutzer das Lebensmittel nicht entnimmt, Anwenden, durch die elektrische Kocheinrichtung (1), einer zweiten bestimmten Kochdauer des bestimmten Lebensmittels (A) in Abhängigkeit von dem zweiten in der aufsteigenden Reihenfolge der Werte innerer Kochtemperatur (X) des bestimmten Lebensmittels (A), die im Speicher aufgezeichnet und klassifiziert sind, aber auch in Abhängigkeit von der Aktivierung der Markierungsfunktion (S) des bestimmten Lebensmittels (A),
- nach Abschluss dieser zweiten bestimmten Kochdauer, erneutes Anzeigen, durch die elektrische Kocheinrichtung (1) an den Benutzer, des Erreichens des zweiten Werts innerer Kochtemperatur (X) des bestimmten Lebensmittels (A), der einem zweiten Garzustand des bestimmten Lebensmittels (A) entspricht,
- und so weiter, wenn der Benutzer das Lebensmittel nicht entnimmt, bis zum Erreichen des letzten in der aufsteigenden Reihenfolge der Werte innerer Kochtemperatur (X) des bestimmten Lebensmittels (A), die im Speicher aufgezeichnet und klassifiziert sind, der einem letzten Garzustand des bestimmten Lebensmittels (A) entspricht.

2. Verfahren zur Ausführung einer Markierungsfunktion (S) eines Lebensmittels ausgehend von einer elektrischen Kocheinrichtung (1) eines Lebensmittels, wie eines Fleischgrills, umfassend eine untere Kochplatte (11) und eine obere Kochplatte (21) zum Erwärmen eines bestimmten Lebensmittels (A) bei deren Kontakt im Laufe einer Kochphase (PC), **dadurch gekennzeichnet, dass** es die folgenden Schritte umfasst:

- Anordnen eines Speichers, in dem Werte unterschiedlicher Werte innerer Kochtemperatur (X) des bestimmten Lebensmittels (A) aufgezeichnet sind, wobei die Werte unterschiedlicher innerer Kochtemperaturen (X) jeweils einem Garzustand des bestimmten Lebensmittels (A) entsprechen, und wobei ebenfalls Vorwärm-Solltemperaturen (Ta, TaS), die im Laufe einer Vorwärmphase (PP) anzuwenden sind, und mindestens eine Kochsolltemperatur (Ta+, Tb, TbS), die im Laufe einer Kochphase (PC) anzuwenden ist, gespeichert sind,
- Aktivieren einer Markierungsfunktion (S) des bestimmten Lebensmittels (A), um eine dann von dem Benutzer gewünschte Markierung der Oberfläche des bestimmten Lebensmittels (A) durchzuführen,
- Auswählen einer Vorwärm-Solltemperatur (Ta, TaS), die im Laufe einer Vorwärmphase (PP) anzuwenden ist, und mindestens einer Kochsolltemperatur (Ta+, Tb, TbS), die im Laufe einer Kochphase (PC) anzuwenden ist, aus jenen, die im Speicher gespeichert sind, in Abhängigkeit von dem bestimmten Lebensmittel (A) und von der Aktivierung der Markierungsfunktion (S) des bestimmten Lebensmittels,
- Auswählen eines Garzustands des bestimmten Lebensmittels (A), der einem der Werte innerer Kochtemperatur entspricht,
- nach einer Vorwärmphase, Setzen des bestimmten Lebensmittels (A) in Kontakt mit der unteren Kochplatte und der oberen Kochplatte, um die Kochphase mit dem Ziel einzuleiten, einen Wert innerer Kochtemperatur des bestimmten Lebensmittels (A) zu erreichen, der einem vorab von einem Benutzer ausgewählten Garzustand des bestimmten Lebensmittels (A) entspricht, danach
- Bestimmen einer Kochdauer des bestimmten Lebensmittels (A) im Laufe der Kochphase in Abhängigkeit von dem Wert innerer Kochtemperatur, der dem Garzustand des bestimmten Lebensmittels (A) entspricht, der von dem Benutzer ausgewählt wird, aber auch in Abhängigkeit von der Aktivierung der Markierungsfunktion (S) des bestimmten Lebensmittels (A),
- nach Abschluss der bestimmten Kochdauer, Anzeigen, durch die elektrische Kocheinrichtung (1), des Erreichens des Werts innerer Kochtemperatur, der dem von dem Benutzer ausgewählten Garzustand des bestimmten Lebensmittels (A) entspricht.

3. Verfahren nach einem der Ansprüche 1 oder 2, wobei die Bestimmung der Kochdauer oder der Kochdauern (T1, ...) des bestimmten Lebensmittels (A), wenn die Markierungsfunktion (S) des bestimmten Lebensmittels (A) aktiviert ist, ein vorbestimmtes Kochgesetz verwendet, das ausgehend von Experimentalangaben aufgestellt wird, oder eine Berechnungstabelle verwendet, wobei das Kochgesetz oder die Berechnungstabelle vor der ersten betrieblichen Verwendung der elektrischen Kocheinrichtung (1) im Werk vorab aufgezeichnet wird.

4. Verfahren nach Anspruch 3, wobei das Kochgesetz durch ein Verfahren der Berechnung durch quadratische oder lineare Korrelation erhalten wird.

5. Verfahren nach einem der Ansprüche 1 bis 4, wobei zusätzlich zu dem mindestens einen der Werte innerer Kochtemperatur (X) aus jenen, die im Speicher eingegeben sind, und der Aktivierung der Markierungsfunktion (S) des bestimmten Lebensmittels (A) durch den Benutzer, die Bestimmung der Kochdauer oder der Kochdauern (T1, ...)

des Lebensmittels ebenfalls in Abhängigkeit von der Dicke (Y) des bestimmten Lebensmittels (A) und/oder von der Auflageoberfläche (Z) des bestimmten Lebensmittels (A) auf den Kochplatten durchgeführt wird.

6. Verfahren nach einem der Ansprüche 1 bis 5, wobei jeder Wert innerer Kochtemperatur (X) des bestimmten Lebensmittels (A), der im Speicher eingegeben ist, eine im Werk vor der ersten betrieblichen Verwendung der elektrischen Kocheinrichtung (1) vorab aufgezeichnete Konstante ist.

7. Verfahren nach einem der Ansprüche 1 bis 6, wobei die Bestimmung der Kochdauer oder der Kochdauern (T1, 12, ...) im Laufe der Kochphase (PC) von der Auflageoberfläche (Z) des bestimmten Lebensmittels (A) abhängt, die durch Temperaturmessungen (Tsup) der oberen Kochplatte (21) erhalten wird.

8. Verfahren nach Anspruch 7, wobei zum Schätzen der Auflageoberfläche (Z) des bestimmten Lebensmittels (A) ein Temperaturmesselement (23) der oberen Kochplatte (21) verwendet wird, das beabstandet von einem Kontaktbereich des bestimmten Lebensmittels (A) angeordnet ist, und anschließend beim Setzen des Lebensmittels in Kontakt mit der oberen Kochplatte (21):

   - die Temperatur (Tsup) der oberen Kochplatte (21) gemessen wird, und eine Dauer, im Laufe derer eine Temperaturabsenkung festgestellt wird, oder
   - eine vorbestimmte Dauer der Stabilisierung der gemessenen Temperatur (Tsup) mit mindestens einer Referenzschwelle verglichen wird.

9. Verfahren nach einem der Ansprüche 1 bis 8, wobei, wenn die Markierungsfunktion (S) des Lebensmittels aktiviert ist, dann eine einzige Kochsolltemperatur (TbS) der unteren Kochplatte (11) und der oberen Kochplatte (21) im Laufe der Kochphase (PC) angewendet wird, wohingegen, wenn die Markierungsfunktion (S) nicht aktiviert ist, dann mindestens zwei Solltemperaturen (Ta+, Tb) der unteren Kochplatte (11) und der oberen Kochplatte (21) im Laufe der Kochphase (PC) angewendet werden.

10. Verfahren nach Anspruch 9, wobei, wenn die Markierungsfunktion (S) nicht aktiviert ist, dann ein Übergehen von einer ersten Solltemperatur (Ta+) zu einer zweiten Solltemperatur (Tb) der unteren Kochplatte (11) und der oberen Kochplatte (21) vorgenommen wird, wenn die Ableitung einer gemessenen Temperatur (Tsup) der oberen Kochplatte (21) das Vorzeichen wechselt.

11. Verfahren nach Anspruch 10, wobei die erste Solltemperatur (Ta+) der unteren Kochplatte (11) und der oberen Kochplatte (21), wenn die Markierungsfunktion (S) nicht aktiviert ist, größer ist als eine Solltemperatur (Ta), die im Laufe einer Vorwärmphase (PP) der elektrischen Kocheinrichtung (1) angewendet wird, und die zweite Solltemperatur (Tb) der unteren Kochplatte (11) und der oberen Kochplatte (21) kleiner ist als die Solltemperatur (Ta), die im Laufe der Vorwärmphase (PP) angewendet wird.

12. Verfahren nach einem der Ansprüche 9 bis 10, wobei die einzige Solltemperatur (TbS) der unteren Kochplatte (11) und der oberen Kochplatte (21), wenn die Markierungsfunktion (S) aktiviert ist, größer ist als die Solltemperatur (TaS), die im Laufe einer Vorwärmphase (PP) der elektrischen Kocheinrichtung (1) angewendet wird.

13. Verfahren nach einem der Ansprüche 1 bis 12, wobei die unterschiedlichen Vorwärm-Solltemperaturen (Ta, TaS) und Kochsolltemperaturen (Ta+, Tb, TbS) sich gemäß dem bestimmten Lebensmittel (A) unterscheiden.

14. Verfahren nach einem der Ansprüche 1 bis 13, wobei, wenn die Markierungsfunktion (S) aktiviert ist, dann die Regulierungstemperatur der unteren Kochplatte (11) und der oberen Kochplatte (21) im Laufe der Kochphase (PC) ausgehend von der Information durchgeführt wird, die von einem Temperaturmesselement (13) der unteren Kochplatte (11) zurückgesendet wird.

15. Elektrische Kocheinrichtung (1) zur Ausführung des Verfahrens nach einem der Ansprüche 1 bis 14, wobei die elektrische Kocheinrichtung (1) eine untere Kochplatte (11) und eine obere Kochplatte (21) zum Erwärmen eines bestimmten Lebensmittels (A) bei deren Kontakt im Laufe einer Kochphase (PC) umfasst, **dadurch gekennzeichnet, dass** sie zum Durchführen einer dann von dem Benutzer gewünschten Markierung der Oberfläche des bestimmten Lebensmittels und zum Erreichen eines von einem Benutzer gewünschten Garzustands des bestimmten Lebensmittels (A) umfasst:

   - einen Speicher zum Speichern von Werten unterschiedlicher innerer Kochtemperaturen (X) des bestimmten Lebensmittels (A) in einer aufsteigenden Reihenfolge, wobei die Werte unterschiedlicher innerer Kochtemperaturen (X) jeweils einem Garzustand des bestimmten Lebensmittels (A) entsprechen, und zum Speichern von Vorwärm-Solltemperaturen (Ta, TaS), die um Laufe einer Vorwärmphase (PP) anzuwenden sind, und mindestens einer Sollkochtemperatur (Ta+, Tb, TbS), die im Laufe einer Kochphase (PC) anzuwenden ist,

- Mittel zur Bestimmung der Dicke (Y) des dann im Kontakt mit den Kochplatten angeordneten Lebensmittels und/oder Mittel zur Schätzung der Auflageoberfläche (Z) dieses bestimmten Lebensmittels (A) auf den Kochplatten (11, 21),

- Mittel zur Aktivierung einer Markierungsfunktion (S) des bestimmten Lebensmittels (A);

- Behandlungsmittel, die eingerichtet sind zum Auswählen einer Vorwärm-Solltemperatur (Ta, TaS), die im Laufe einer Vorwärmphase (PP) anzuwenden ist, und mindestens einer Kochsolltemperatur (Ta+, Tb, TbS), die im Laufe einer Kochphase (PC) anzuwenden ist, aus jenen, die im Speicher gespeichert sind, in Abhängigkeit von dem bestimmten Lebensmittel (A) und von der Aktivierung der Markierungsfunktion (S) des bestimmten Lebensmittels, und zum Bestimmen mindestens einer Kochdauer (T1, ...) des so angeordneten bestimmten Lebensmittels (A) in Abhängigkeit von:

* dem mindestens einen der Werte innerer Kochtemperatur (X) aus denen, die im Speicher eingegeben sind,
* der Dicke (Y) des Lebensmittels und/oder der Auflageoberfläche (Z) des Lebensmittels, und
* der Aktivierung der Markierungsfunktion (S) des Lebensmittels durch den Benutzer ausgehend von Aktivierungsmitteln dieser Funktion,
* Mitteln zur Anzeige, durch die elektrische Kocheinrichtung (1) an den Benutzer, des Erreichens des entsprechenden Garzustands.

16. Kocheinrichtung nach Anspruch 15, umfassend einen unteren elektrischen Schalter, der geeignet ist, die Stromzufuhr des unteren elektrischen Heizelements (12) zu erlauben oder zu unterbrechen, und einen oberen elektrischen Schalter, der geeignet ist, die Stromzufuhr des oberen elektrischen Heizelements (22) zu erlauben oder zu unterbrechen.

17. Kocheinrichtung nach Anspruch 16, wobei mindestens ein Kochprogramm definiert ist mit:

- einer Solltemperatur der Vorwärmphase (PP), und mindestens einer Solltemperatur und mindestens einer Kochdauer der mindestens einen Kochphase (PC), die am unteren elektrischen Heizelement (12) angewendet werden, und

- einer Solltemperatur der Vorwärmphase (PP), und mindestens einer Solltemperatur und mindestens einer Kochdauer einer Kochphase (PC), die am oberen elektrischen Heizelement (22) angewendet werden, wobei die Behandlungsmittel eingerichtet sind, um den unteren elektrischen Schalter und den oberen elektrischen Schalter während der Vorwärmphase (PP) und/oder während der Kochphase (PC) unabhängig zu steuern.

18. Kocheinrichtung (1) nach Anspruch 17, wobei für ein gleiches Kochprogramm die Solltemperatur der Vorwärmphase (PP) und die mindestens eine Solltemperatur der Kochphase, die am unteren elektrischen Heizelement (12) angewendet werden, sich jeweils von der Solltemperatur der Vorwärmphase (PP) und der mindestens einen Solltemperatur der Kochphase (PC), die am oberen elektrischen Heizelement (22) angewendet werden, unterscheiden.

## Claims

1. Method for implementing a function (S) for marking a food from an electric food cooking appliance (1), such as a meat grill, comprising a lower cooking plate (11) and an upper cooking plate (21) for heating upon their contact, a determined food (A) during a cooking phase (PC), **characterised in that** this method comprises the following steps:

- disposing a memory wherein are recorded and classified according to an increasing order of values of different internal cooking temperatures (X) of the determined food (A), said values of different internal cooking temperatures (X) each corresponding to a cooking state at the core of the determined food (A), and wherein are also stored, preheating setpoint temperatures (Ta, TaS) to be applied during a preheating phase (PP), and at least one cooking setpoint temperature (Ta+, Tb, TbS) to be applied during a cooking phase (PC),

- activating a function (S) for marking the determined food (A) to produce a marking of the surface of the determined food (A) thus desired by the user,

- selecting a preheating setpoint temperature (Ta, TaS) to be applied during a preheating phase (PP) and at least one cooking setpoint temperature (Ta+, Tb, TbS) to be applied during a cooking phase (PC) among those stored in the memory according to the determined food (A) and of the activation of the function (S) for marking the determined food (A),

- after a preheating phase (PP), contacting the determined food (A) with the lower cooking plate (11) and the upper cooking plate (21) to start the cooking phase (PC) with the aim of reaching at least one of the values of internal cooking temperature (X) of the determined food (A) thus desired by a user, then

- determining a first cooking duration (T1) of the determined food (A) during the cooking phase (PC) according to the first in the increasing order of said values of internal cooking temperature (X) of the determined food (A) from among the different values of internal cooking temperature (X) of the determined food (A) recorded and classified in the memory, but also according to the activation of the function (S) for marking the determined food (A),

- from said first determined cooking duration (T1), indicating to the user, by the electric cooking appliance (1), reaching a first value of internal cooking temperature (X) corresponding to a first cooking state at the core of the determined food (A), then:

- if the user does not remove the food, applying by the electric cooking appliance (1), a second determined cooking duration of the determined food (A) according to the second in the increasing order of said values of internal cooking temperature (X) of the determined food (A) recorded and classified in the memory, but also according to the activation of the function (S) for marking the determined food (A),

- from this second determined cooking duration, again indicating to the user, by the electric cooking appliance (1), reaching the second value of internal cooking temperature (X) of the determined food (A) corresponding to a second cooking state at the core of the determined food (A),

- and so on, if the user does not remove the food until reaching the last in the increasing order of said values of internal cooking temperature (X) of the determined food (A) recorded and classified in the memory corresponding to a last cooking state at the core of the determined food (A).

2. Method for implementing a function (S) for marking a food from an electric food cooking appliance (1), such as a meat grill, comprising a lower cooking plate (11) and an upper cooking plate (21) to heat upon their contact, a determined food (A) during a cooking phase (PC), **characterised in that** it comprises the following steps:

- disposing a memory wherein are recorded, values of different internal cooking temperatures (X) of the determined food (A), said values of different internal cooking temperatures (X) each corresponding to a cooking state at the core of the determined food (A), and wherein are also stored, preheating setpoint temperatures (Ta, TaS) to be applied during a preheating phase (PP), and at least one cooking setpoint temperature (Ta+, Tb, TbS) to be applied during a cooking phase (PC),

- activating a function (S) for marking the determined food (A) to produce a marking of the surface of the determined food (A) thus desired by the user,

- selecting a preheating setpoint temperature (Ta, TaS) to be applied during a preheating phase (PP) and at least one cooking setpoint temperature (Ta+, Tb, TbS) to be applied during a cooking phase (PC) among those stored in the memory according to the determined food (A) and of the activation of the function (S) for marking the determined food (A),

- selecting a cooking state at the core of the determined food (A) corresponding to one of said values of internal cooking temperature,

- after a preheating phase, contacting the determined food (A) with the lower cooking plate and the upper cooking plate to start the cooking phase, with the aim of reaching a value of internal cooking temperature of the determined food (A) corresponding to a cooking state at the core of the determined food (A) previously selected by a user, then

- determining a cooking duration of the determined food (A) during the cooking phase according to the value of the internal cooking temperature corresponding to the cooking state at the core of the determined food (A) selected by the user, but also according to the activation of the function (S) for marking the determined food (A),

- from the determined cooking duration, indicating by the electric cooking appliance (1), reaching the value of internal cooking temperature corresponding to the cooking state at the core of the determined food (A) selected by the user.

3. Method according to one of claims 1 or 2, wherein the determination of the cooking duration(s) (T1, etc.) of the determined food (A) when the function (S) for marking the determined food (A) is activated, uses a predetermined cooking rule established from experimental data, or uses a calculation table, said cooking rule or said calculation table being prerecorded in the factory, before the first operational use of the electric cooking appliance (1).

4. Method according to claim 3, wherein the cooking rule is obtained by a method of calculating by quadratic or linear correlation.

5. Method according to claim 1 to 4, wherein in addition to at least one of the values of internal cooking temperature (X) among those memorised and to the activation of the function (S) for marking the determined food (A) by the user, the determination of the cooking duration(s) (T1, etc.) of the food is also done according to the thickness (Y) of the determined food (A), and/or the surface (Z) occupied by the determined food (A) on the cooking plates.

6. Method according to one of claims 1 to 5, wherein each value of internal cooking temperature (X) of the determined food (A) memorised is a constant prerecorded in the factory, before the first operational use of the electric cooking appliance (1).

7. Method according to one of claims 1 to 6, wherein the determination of the cooking duration(s) (T1, T2, etc.) during the cooking phase (PC) is a function of the surface (Z) occupied by the determined food (A), which is obtained by measuring temperatures (Tsup) of the upper cooking plate (21).

8. Method according to claim 7, wherein, to estimate the surface (Z) occupied by the determined food (A), an element for measuring the temperature (23) of the upper cooking plate (21) disposed at a distance from a contact zone of the determined food (A) is used, and consecutively to the contacting of the food with the upper cooking plate (21), the following are measured:

   - the temperature (Tsup) of the upper cooking plate (21), and a duration during which a drop in temperature is observed, is compared with at least one reference threshold, or
   - a predetermined duration for stabilising the measured temperature (Tsup).

9. Method according to one of claims 1 to 8, wherein when the function (S) for marking the food is activated, then one single cooking setpoint temperature (TbS) of the lower cooking plate (11) and of the upper cooking plate (21) is applied during the cooking phase (PC) while when the marking function (S) is not activated, then at least two setpoint temperatures (Ta+, Tb) of the lower cooking plate (11) and of the upper cooking plate (21) are applied during the cooking phase (PC).

10. Method according to claim 9, wherein when the marking function (S) is not activated, then a shift from a first setpoint temperature (Ta+) to a second setpoint temperature (Tb) of the lower cooking plate (11) and of the upper cooking plate (21) is performed when the derivative of a measured temperature (Tsup) of the upper cooking plate (21) changes sign.

11. Method according to claim 10, wherein the first setpoint temperature (Ta+) of the lower cooking plate (11) and of the upper cooking plate (21) when the marking function (S) is not activated, is greater than a setpoint temperature (Ta) applied during a preheating phase (PP) of the electric cooking appliance (1), and the second setpoint temperature (Tb) of the lower cooking plate (11) and of the upper cooking plate (21) is less than the setpoint temperature (Ta) applied during the preheating phase (PP).

12. Method according to one of claims 9 to 10, wherein the single setpoint temperature (TbS) of the lower cooking plate (11) and of the upper cooking plate (21) when the marking function (S) is activated, is greater than the setpoint temperature (TaS) applied during a preheating phase (PP) of the electric cooking appliance (1).

13. Method according to one of claims 1 to 12, wherein the different preheating (Ta, Tas) and different cooking (Ta+, Tb, TbS) setpoint temperatures according to the determined food (A).

14. Method according to one of claims 1 to 13, wherein when the marking function (S) is activated, then the temperature regulation of the lower cooking plate (11) and of the upper cooking plate (21) during the cooking phase (PC) is achieved from the information returned by an element for measuring the temperature (13) of the lower cooking plate (11).

15. Electric cooking appliance (1) for implementing the method according to one of claims 1 to 14, the electric cooking appliance (1) comprising a lower cooking plate (11) and an upper cooking plate (21) to hear upon their contact, a determined food (A) during a cooking phase (PC), **characterised in that** it comprises, to achieve a marking of the surface of the determined food thus desired by the user, and to reach a cooking state at the core of the determined food (A) desired by a user:

   - a memory for storing, according to an increasing order of values of different internal cooking temperatures (X) of the determined food (A), said values of different internal cooking temperatures (X), each corresponding to a cooking state at the core of the determined food (A), and to store preheating setpoint temperatures (Ta, TaS) to be applied during a preheating phase (PP) and at least one cooking setpoint temperature (Ta+, Tb, TbS) to be applied during a cooking phase (PC),

- means for determining the thickness (Y) of the food thus disposed in contact with the cooking plates and/or means for estimating the surface (Z) occupied by this determined food (A) on the cooking plates (11, 21),
- means for activating a function (S) for marking the determined food (A);
- processing means arranged to select a preheating setpoint temperature (Ta, TaS) to be applied during a preheating phase (PP) and at least one cooking setpoint temperature (Ta+, Tb, TbS) to be applied during a cooking phase (PC) among those stored in the memory according to the determined food (A) and the activation of the function (S) for marking the determined food, and to determine at least one cooking duration (T1, etc.) of the determined food (A) thus disposed, according to:

  - at least one of the values of internal cooking temperature (X) among those memorised,
  - the thickness (Y) of the food, and/or of the surface (Z) occupied by the food, and
  - the activation of the function (S) for marking the food by the user from the activation means of this function,

- means for indicating to the user, by the electric cooking appliance (1), of reaching the corresponding cooking state at the core.

16. Cooking appliance according to claim 15 comprising a lower electric switch capable of enabling or interrupting the power supply of the lower electric heating element (12) and an upper electric switch capable of enabling or interrupting the power supply of the upper electric heating element (22).

17. Cooking appliance according to claim 16, wherein at least one cooking program is defined with:

    - a setpoint temperature of the preheating phase (PP), and at least one setpoint temperature and at least one cooking duration of the at least one cooking phase (PC) applied to the lower electric heating element (12), and
    - a setpoint temperature of the preheating phase (PP), and at least one setpoint temperature and at least one cooking duration of a cooking phase (PC) applied to the upper electric heating element (22), the processing means being arranged to independently control the lower electric switch and the upper electric switch during the preheating phase (PP) and/or during the cooking phase (PC).

18. Cooking appliance (1) according to claim 17, wherein for one same cooking program, the setpoint temperature of the preheating phase (PP) and the at least one setpoint temperature of the cooking phase applied to the lower electric heating element (12), respectively different from the setpoint temperature of the preheating phase (PP) and of the at least one setpoint temperature of the cooking phase (PC) applied to the upper electric heating element (22).

FIG.1

FIG.2

FIG.3

FIG.4

FIG.5

FIG.6

**EP 3 905 930 B1**

**Documents brevets cités dans la description**

- WO 2013107964 A

- WO 2013107965 A